# EUROPÄISCHE PATENTANMELDUNG

(11) **EP 3 586 581 A1**
(43) Veröffentlichungstag der Anmeldung: **01.01.2020**
(21) Anmeldenummer: 19152754.8
(22) Anmeldetag: 21.01.2019
(51) Int. Cl.: A01C 1/04, A01G 9/20, A01G 31/02, A01C 1/02, A01G 9/24, A01G 27/00, A01G 7/04

(54) **SAATMATTE ZUM EINBRINGEN IN EINE VORRICHTUNG ZUR AUFZUCHT VON PFLANZEN UND VERFAHREN ZUM HERSTELLEN DERSELBEN**

(30) Priorität: 21.06.2018 DE 102018114954
(71) Anmelder: agrilution GmbH, 81249 München (DE)
(72) Erfinder: LÖSSL, Maximilian, 80469 München (DE); WAGNER, Philipp, 82256 Fürstenfeldbruck (DE)
(74) Vertreter: Viering, Jentschura & Partner mbB Patent- und Rechtsanwälte

(57) **Zusammenfassung**

In verschiedenen Ausführungsbeispielen wird eine Saatmatte zum Einbringen in eine Vorrichtung zur Aufzucht von Pflanzen bereitgestellt, wobei die Saatmatte ein Trägersubstrat und Saatgut aufweist, wobei das Saatgut mittels eines Klebers auf dem Trägersubstrat fixiert ist. Des Weiteren kann ein Verfahren zum Herstellen einer Saatmatte in verschiedenen Ausführungsbeispielen aufweisen: Aufbringen eines Klebers auf ein Trägersubstrat; Aufbringen von Saatgut auf das mit dem Kleber versehene Trägersubstrat; und Fixieren des Saatguts mittels des Klebers auf dem Trägersubstrat.

## Beschreibung

Verschiedene Ausführungsbeispiele betreffen eine Saatmatte zur Aufzucht von Pflanzen und ein Verfahren zum Herstellen derselben.

Im Bereich der Versorgung mit frischen Produkten, wie beispielsweise Kräutern, Salat, Obst und Gemüse, sind die Ansprüche der Verbraucher in den letzten Jahren zunehmend gestiegen. Insbesondere seit dem Anprangern von Missständen in der Haltung von Schlachttieren und der zunehmenden Verbreitung vegetarischer oder veganer Ernährung ist das Bewusstsein vieler Verbraucher für und ihr Bedarf an frischen Produkten gestiegen.

Bisher werden diese Produkte zum allergrößten Teil entweder auf Feldern oder in Gewächshäusern von Großbetrieben erzeugt und mittels des Verkaufs in Supermärkten zu den Verbrauchern gebracht. In kleinerem Umfang versorgen sich die Verbraucher auch direkt beim Erzeuger auf Wochenmärkten und im Direktverkauf auf Bauernhöfen, wobei diese Vertriebswege aufgrund der zeitlich eingeschränkten Verfügbarkeit oder der notwendigen räumlichen Nähe zum Erzeuger nur einem relativ kleinen Teil der Bevölkerung zur Verfügung stehen.

Mit dem für die eigene Gesundheit sensibilisierten Bewusstsein großer Teile insbesondere der in Städten lebenden Bevölkerung erwächst gerade hier zunehmend ein Bedürfnis nach Erzeugnissen aus kontrolliertem Anbau und sogar der Wunsch nach persönlicher Kontrolle und sinnstiftender Beschäftigung mit dem Anbau eigener, entsprechend frischer Produkte.

Allerdings hat nur ein sehr geringer Teil der städtischen Bevölkerung Zugang zu einem Garten oder entsprechenden Anlagen, in dem beispielsweise eigene kleine Gewächshäuser aufgestellt werden könnten, um frische Produkte anzubauen. Auch bietet die städtische Umgebung selten die Möglichkeit, ohne größeren organisatorischen Aufwand mit Pflanzkästen und -töpfen zu hantieren, geschweige denn, die darin angesetzten Pflanzen einerseits mit dem notwendigen Schutz gegenüber Wettereinflüssen zu versehen und andererseits ausreichend mit Sonnenlicht zu versorgen, um das erwünschte Wachstum der Pflanzen zu fördern.

Außerdem hat gerade die städtische Bevölkerung häufig einen Tagesablauf, der geprägt ist durch das Arbeiten außer Haus sowie häufig lange Wege zu und von der Arbeitsstätte, so dass keine Muße besteht, sich neben allem anderen auch noch um das Gedeihen von Pflanzen zu kümmern, dieses zu beobachten und die Pflege dieser Pflanzen an die jeweilige Wachstumsphase anzupassen.

Aufgrund all dieser Schwierigkeiten schrecken viele Menschen, die eigentlich gerne vom Anbau eigener Pflanzen und der Ernte eigener Produkte profitieren würden, vor dem Aufwand zurück, den das Anbauen dieser Pflanzen mit sich bringt. Dieses Zurückschrecken wird noch verstärkt durch das Gefühl, dass die Wahrscheinlichkeit sehr gering ist, dass am Ende der Aufwand tatsächlich durch frische Zutaten aus dem eigenen Anbau belohnt wird, da im hektischen städtischen Alltag nicht gewährleistet werden kann, dass die Pflege der Pflanzen so optimal ist, dass sie zu guten Ergebnissen führt.

Im Sinne des aufgeklärten Verbrauchers, der sich bewusst gesund ernähren will und dabei auf Nachhaltigkeit bedacht ist, aber weder die räumlichen noch die zeitlichen Möglichkeiten zum Anbau von Pflanzen in herkömmlicher Weise hat, ist es also wünschenswert, eine Möglichkeit zu schaffen, mithilfe derer sich auch Kleinverbraucher, wie beispielsweise der typische moderne Single-Städter, im gewünschten Umfang selbständig mit frischen Nahrungszutaten versorgen können.

Im Sinne dieser Anforderungen wurde kürzlich eine Vorrichtung vorgestellt, mit Hilfe derer auch Einzelverbraucher in einem kleinen, an übliche Küchengrößen angepassten Maßstab Kräuter, Salate, Gemüse oder Obst frisch ziehen können (siehe DE 10 2015 118 059 A1).

Besondere Anforderungen bei der Aufzucht von Pflanzen in einer solchen Vorrichtung sind an die Bereitstellung des Saatguts geknüpft. Dabei muss das Saatgut dem Verbraucher auf eine Weise bereitgestellt werden, dass es in die Vorrichtung eingebracht werden kann, ohne dass der Verbraucher selber die Samenkörner auf oder in das Pflanzsubstrat ausbringen muss, ohne dass der Verbraucher dabei in größerem Umfang mit Erde oder ähnlichen voluminösen Pflanzsubstraten hantieren muss und ohne dass dabei in größerem Maße Schmutz entsteht. Außerdem sollten Saatgut und Substrat in Abmessungen bzw. Größen bzw. Mengen derart bereitgestellt werden, dass der Einzelhandel entsprechende Mengen an Saatgut vorhalten kann, der Transport zum Verbraucher einfach möglich ist und auch von dem Verbraucher eine Vorratshaltung im Maßstab seines Einzelhaushalts vorgenommen werden kann.

In verschiedenen Ausführungsbeispielen wird eine Saatmatte zum Einbringen in eine Vorrichtung zur Aufzucht von Pflanzen bereitgestellt, wobei die Saatmatte ein Trägersubstrat und Saatgut aufweist, wobei das Saatgut mittels eines Klebers auf dem Trägersubstrat fixiert ist.

Die Saatmatte kann dazu eingerichtet sein, dass das darauf fixierte Saatgut keimt und daraus Pflanzen wachsen.

In verschiedenen Ausführungsbeispielen ist das Trägersubstrat aus einem oder mehreren organischen Materialien, aus einem oder mehreren anorganischen Materialien oder einer Kombination aus einem oder mehreren organischen Materialien und einem oder mehreren anorganischen Materialien gebildet.

In verschiedenen Ausführungsbeispielen ist das Trägersubstrat beispielsweise aus einem Material gebildet, ausgewählt aus einer Gruppe bestehend aus Jute, Hanf, Steinwolle, Mineralwolle, Wolle, Wollfaser, Baumwolle, Cellulose, Viscose, Filz, Textilfaser, synthetischen Fasern, Eucalyptus Jiffy® Vitro-Plug™ oder Oasis® Floral Foam.

In verschiedenen Ausführungsbeispielen ist der Kleber ein organischer Kleber. Dabei ist das Material des Klebers nicht auf organische Materialien beschränkt, sondern kann beispielsweise auch aus einem anorganischen Kleber bestehen.

In verschiedenen Ausführungsbeispielen ist der Kleber ein auf Stärke basierender Kleber. Alternativ können auch beispielsweise Cellulose oder Hydroxyethylcellulose (HEC) als Klebstoff oder auf diesen Substanzen basierende Kleber verwendet werden.

In verschiedenen Ausführungsbeispielen kann das Saatgut beispielsweise Samen von Salat, Kräutern, Obst und Gemüse, wie beispielsweise Tomaten, und Pilze oder Pilzmyzelien aufweisen.

In verschiedenen Ausführungsbeispielen kann die Saatmatte ferner eine RFID-Kennzeichnung und/oder eine QR-Kennzeichnung und/oder einen Barcode aufweisen.

In verschiedenen Ausführungsbeispielen codiert die RFID-Kennzeichnung bzw. die QR-Kennzeichnung bzw. der Barcode das auf der Saatmatte fixierte Saatgut.

Eine Vorrichtung zur Aufzucht von Pflanzen kann dazu eingerichtet sein, mittels eines Programmsensors einer Programmsteuerung das auf der Saatmatte fixierte Saatgut zu identifizieren.

In verschiedenen Ausführungsbeispielen kann der Programmsensor als RFID-Sensor und/oder QR-Code Sensor und/oder Barcode-Sensor eingerichtet sein und kann dazu eingerichtet sein, RFID-Signale der RFID-Kennzeichnung bzw. die QR-Kennzeichnung bzw. den Barcode von mindestens einer in einen Aufnahmeraum der Vorrichtung eingebrachten Saatmatte zur Steuerung der Programmsteuerung zu erfassen.

Die Programmsteuerung kann beispielsweise individuell auf in dem Aufnahmeraum aufgenommenes Saatgut abgestimmte Klimatisierungsdaten und/oder Bewässerungsdaten und/oder Beleuchtungsdaten aufweisen.

Für die Programmsteuerung kann ein Datenspeicher vorgesehen sein, aus welchem die individuell auf das Saatgut abgestimmten Klimatisierungsdaten und/oder Bewässerungsdaten und/oder Beleuchtungsdaten abrufbar sind. Der Datenspeicher kann beispielsweise über eine in der Vorrichtung vorgesehene Internetverbindung als externer Datenspeicher vorgesehen sein.

In verschiedenen Ausführungsbeispielen kann die RFID-Kennzeichnung als RFID-Chip ausgeführt sein.

Der RFID-Chip kann beispielsweise Daten bezüglich des auf der Saatmatte fixierten Saatguts aufweisen. Außerdem kann der RFID-Chip beispielsweise Daten bezüglich der Saatmatte aufweisen. Beispielsweise können die auf dem RFID-Chip gespeicherten Daten Daten betreffend einen Namen des Saatguts, eine Sorte des Saatguts, eine Spezies des Saatguts, einen Hersteller des Saatguts, eine LOT-Nummer des Saatguts, ein Herstellungsjahr der Saatmatte und/oder eine Registrierungsnummer des Herstellers und/oder Vertreibers der Saatmatten aufweisen.

Ferner können die auf dem RFID-Chip gespeicherten Daten Daten betreffend individuell auf das auf den Saatmatten fixierte Saatgut abgestimmte Klimatisierungsdaten und/oder Bewässerungsdaten und/oder Beleuchtungsdaten sein.

Die Vorrichtung zur Aufzucht von Pflanzen kann dazu eingerichtet sein, mittels der Programmsteuerung auf Basis der Klimatisierungsdaten in dem Aufnahmeraum ein auf das auf der Saatmatte fixierte Saatgut und/oder auf die auf der Saatmatte wachsenden Pflanzen abgestimmtes Innenraumklima einzustellen.

Beispielsweise kann die Vorrichtung zur Aufzucht von Pflanzen eingerichtet sein, mittels der Programmsteuerung auf Basis der Bewässerungsdaten der Saatmatte Wasser und Nährstoffe in einer auf das auf der Saatmatte fixierte Saatgut und/oder auf die auf der Saatmatte wachsenden Pflanzen abgestimmten Menge und Zusammensetzung zuzuführen.

Außerdem kann die Vorrichtung zur Aufzucht von Pflanzen beispielsweise eingerichtet sein, mittels der eine Beleuchtungseinrichtung steuernden Programmsteuerung auf Basis der Beleuchtungsdaten Licht in einer auf das auf der Saatmatte fixierte Saatgut und/oder auf die auf der Saatmatte wachsenden Pflanzen abgestimmten Wellenlängenzusammensetzung, in einer auf das auf der Saatmatte fixierte Saatgut und/oder auf die auf der Saatmatte wachsenden Pflanzen abgestimmten Intensität und für eine auf das auf der Saatmatte fixierte Saatgut und/oder auf die auf der Saatmatte wachsenden Pflanzen abgestimmte Dauer abzustrahlen.

In verschiedenen Ausführungsbeispielen kann die RFID-Kennzeichnung bzw. die QR-Kennzeichnung bzw. der Barcode dazu eingerichtet sein, von der Saatmatte abgetrennt zu werden.

Die Saatmatte kann dazu eingerichtet sein, mit einer Düngermatte verbunden zu werden.

Außerdem kann die Saatmatte dazu eingerichtet sein, gestapelt zu werden. Beispielsweise kann die Saatmatte dazu eingerichtet sein, mit der Düngermatte gestapelt zu werden.

In verschiedenen Ausführungsbeispielen kann ein Verfahren zum Herstellen einer Saatmatte aufweisen: Aufbringen eines Klebers auf ein Trägersubstrat; Aufbringen von Saatgut auf das mit dem Kleber versehene Trägersubstrat; und Fixieren des Saatguts mittels des Klebers auf dem Trägersubstrat.

In verschiedenen Ausführungsbeispielen kann das Saatgut derart auf dem Trägersubstrat fixiert werden, dass das Saatgut keimen kann und daraus auf der Saatmatte Pflanzen wachsen können.

Das Trägersubstrat kann beispielsweise aus einem oder mehreren organischen Materialien gebildet werden. Alternativ kann das Trägersubstrat beispielsweise auch aus einem oder mehreren anorganischen Materialien oder einer Kombination aus einem organischen Material und einem anorganischen Material gebildet sein.

In verschiedenen Ausführungsbeispielen kann das Trägersubstrat beispielsweise aus einem Material ausgewählt aus einer Gruppe bestehend aus Jute, Hanf, Steinwolle, Mineralwolle, Wolle, Wollfaser, Baumwolle, Cellulose, Viscose, Filz, Textilfaser, synthetischen Fasern, Eucalyptus Jiffy® Vitro-Plug™ oder Oasis® Floral Foam gebildet werden.

In verschiedenen Ausführungsbeispielen kann der Kleber ein organischer Kleber sein. Dabei ist das Material des Klebers nicht auf organische Materialien beschränkt, sondern kann beispielsweise auch aus einem anorganischen Kleber bestehen.

Beispielsweise kann der Kleber ein auf Stärke basierender Kleber sein. Alternativ können auch beispielsweise Cellulose oder Hydroxyethylcellulose (HEC) als Klebstoff oder auf diesen Substanzen basierende Kleber verwendet werden.

In verschiedenen Ausführungsbeispielen kann als Saatgut beispielsweise Samen von Salat, Kräutern, Obst und Gemüse, wie beispielsweise Tomaten, und Pilze oder Pilzmyzelien verwendet werden.

In verschiedenen Ausführungsbeispielen kann das Aufbringen des Klebers auf das Trägersubstrat Aufbringen des Klebers auf das Trägersubstrat mittels einer oder mehrerer Walzen, Aufbringen des Klebers auf das Trägersubstrat mittels eines Sprühsystems oder Aufbringen des Klebers auf das Trägersubstrat mittels eines oder mehrerer Pinsel aufweisen.

In verschiedenen Ausführungsbeispielen kann das Aufbringen von Saatgut auf das mit dem Kleber versehene Trägersubstrat Aufbringen des Saatguts auf den feuchten Kleber (beispielsweise auf das feuchte Trägersubstrat) aufweisen, wobei das Saatgut aus Samen besteht, und wobei die Samen gestreut oder einzeln an einer bestimmten Position präzise abgelegt werden.

Die in dem Kleber bzw. dem feuchten Trägersubstrat vorhandene Feuchtigkeit kann so gering sein, dass das Saatgut nicht zu keimen beginnt.

In verschiedenen Ausführungsbeispielen kann der Kleber bzw. das Trägersubstrat anschließend an der Luft und/oder mittels Wärme und/oder mittels eines Luftstroms getrocknet werden.

In verschiedenen Ausführungsbeispielen kann das Verfahren ferner Kennzeichnen der Saatmatte mittels einer RFID-Kennzeichnung und/oder einer QR-Kennzeichnung und/oder eines Barcodes aufweisen.

Beispielsweise kann die RFID-Kennzeichnung bzw. die QR-Kennzeichnung bzw. der Barcode das auf der Saatmatte fixierte Saatgut codieren.

In verschiedenen Ausführungsbeispielen kann die RFID-Kennzeichnung als RFID-Chip ausgeführt sein.

Der RFID-Chip kann beispielsweise Daten bezüglich des auf der Saatmatte fixierten Saatguts aufweisen. Außerdem kann der RFID-Chip beispielsweise Daten bezüglich der Saatmatte aufweisen. Die Saatmatte und/oder das darauf fixierte Saatgut sind vorzugsweise mittels des RFID-Chips eineindeutig identifizierbar.

Beispielsweise können die auf dem RFID-Chip gespeicherten Daten Daten betreffend einen Namen des Saatguts, eine Sorte des Saatguts, eine Spezies des Saatguts, einen Hersteller des Saatguts, eine LOT-Nummer des Saatguts, ein Herstellungsjahr der Saatmatte und/oder eine Registrierungsnummer des Herstellers und/oder des Vertreibers der Saatmatte aufweisen.

Ferner können die auf dem RFID-Chip gespeicherten Daten beispielsweise ferner Daten betreffend individuell auf das auf den Saatmatten fixierte Saatgut abgestimmte Klimatisierungsdaten und/oder Bewässerungsdaten und/oder Beleuchtungsdaten sein.

In verschiedenen Ausführungsbeispielen kann das Verfahren ferner Herstellen einer oder mehrerer Düngermatten aufweisen. Des Weiteren kann das Verfahren Verbinden von jeweils einer Saatmatte mit jeweils einer Düngermatte aufweisen.

In verschiedenen Ausführungsbeispielen können die Saatmatten stapelbar ausgeführt sein. Beispielsweise können die Saatmatten mit den Düngermatten stapelbar ausgeführt sein.

In verschiedenen Ausführungsbeispielen kann ein Verfahren zur Aufzucht von Pflanzen aufweisen: Herstellen einer oder mehrerer Saatmatten, wie oben beschrieben; Einbringen der einen oder mehreren mit Saatgut versehenen Saatmatten in einen Aufnahmeraum einer Vorrichtung zur Aufzucht von Pflanzen; und Bereitstellen von Umgebungsbedingungen derart, dass das Saatgut auf der einen oder mehreren Saatmatten keimen kann und daraus Pflanzen wachsen können, mittels der Vorrichtung.

In verschiedenen Ausführungsbeispielen kann ein Verfahren zur Aufzucht von Pflanzen aufweisen: Herstellen einer oder mehrerer Saatmatten, wie oben beschrieben; Bereitstellen von ersten Umgebungsbedingungen derart, dass das Saatgut auf der einen oder mehreren Saatmatten keimen kann und daraus Pflanzen wachsen können; Unterbrechen des Wachstumsprozesses mittels geeigneter zweiter Umgebungsbedingungen; Einbringen der einen oder mehreren Saatmatten, auf denen Pflanzen wachsen, in einen Aufnahmeraum einer Vorrichtung zur Aufzucht von Pflanzen; und Bereitstellen von dritten Umgebungsbedingungen derart, dass die Pflanzen weiter wachsen und gegebenenfalls Früchte tragen können, mittels der Vorrichtung.

Beispielsweise können die Umgebungsbedingungen eine Lufttemperatur, eine Luftfeuchtigkeit, eine Wasserzufuhr, eine Nährstoffzufuhr, eine Beleuchtungsqualität, eine Beleuchtungsintensität und eine Beleuchtungsdauer betreffen.

In verschiedenen Ausführungsbeispielen kann die Vorrichtung zur Aufzucht von Pflanzen mittels eines Programmsensors einer Programmsteuerung das auf der Saatmatte fixierte Saatgut identifizieren.

Beispielsweise kann der Programmsensor als RFID-Sensor und/oder QR-Code Sensor und/oder Barcode-Sensor eingerichtet sein und kann RFID-Signale der RFID-Kennzeichnung bzw. die QR-Kennzeichnung bzw. den Barcode von mindestens einer in den Aufnahmeraum der Vorrichtung eingebrachten Saatmatte zur Steuerung der Programmsteuerung erfassen.

In dem Verfahren kann die Programmsteuerung beispielsweise aus einem Datenspeicher individuell auf das identifizierte Saatgut abgestimmte Klimatisierungsdaten und/oder Bewässerungsdaten und/oder Beleuchtungsdaten abrufen. Der Datenspeicher kann beispielsweise als externer Datenspeicher vorgesehen sein. Die Programmsteuerung kann die Daten beispielsweise mittels einer Internetverbindung abrufen.

In verschiedenen Ausführungsbeispielen kann die Vorrichtung zur Aufzucht von Pflanzen Daten zu auf der Saatmatte fixiertem Saatgut aus einem an der Saatmatte angebrachten RFID-Chip abrufen. Beispielsweise kann die Vorrichtung zur Aufzucht von Pflanzen die Saatmatte und/oder das darauf fixierte Saatgut vorzugsweise mittels des RFID-Chips eindeutig identifizieren.

Der RFID-Chip kann beispielsweise Daten bezüglich des auf der Saatmatte fixierten Saatguts aufweisen. Ferner kann der RFID-Chip beispielsweise Daten bezüglich der Saatmatte aufweisen.

Beispielsweise können die auf dem RFID-Chip gespeicherten Daten Daten betreffend einen Namen des Saatguts, eine Sorte des Saatguts, eine Spezies des Saatguts, ein Hersteller des Saatguts, eine LOT-Nummer des Saatguts, ein Herstellungsjahr der Saatmatte und/oder eine Registrierungsnummer des Herstellers und/oder des Vertreibers der Saatmatten sein.

Ferner können die auf dem RFID-Chip gespeicherten Daten beispielsweise Daten betreffend individuell auf das auf den Saatmatten fixierte Saatgut abgestimmte Klimatisierungsdaten und/oder Bewässerungsdaten und/oder Beleuchtungsdaten sein.

In dem Verfahren kann die Vorrichtung zur Aufzucht von Pflanzen beispielsweise mittels der Programmsteuerung auf Basis der Klimatisierungsdaten in dem Aufnahmeraum ein auf das auf der Saatmatte fixierte Saatgut und/oder auf die auf der Saatmatte wachsenden Pflanzen abgestimmtes Innenraumklima einstellen.

Außerdem kann die Vorrichtung zur Aufzucht von Pflanzen beispielsweise mittels der Programmsteuerung auf Basis der Bewässerungsdaten der Saatmatte Wasser und Nährstoffe in einer auf das auf der Saatmatte fixierte Saatgut und/oder auf die auf der Saatmatte wachsenden Pflanzen abgestimmten Menge und Zusammensetzung zuführen.

Des Weiteren kann die Vorrichtung zur Aufzucht von Pflanzen beispielsweise mittels der eine Beleuchtungseinrichtung steuernden Programmsteuerung auf Basis der Beleuchtungsdaten Licht in einer auf das auf der Saatmatte fixierte Saatgut und/oder auf die auf der Saatmatte wachsenden Pflanzen abgestimmten Wellenlängenzusammensetzung, in einer auf das auf der Saatmatte fixierte Saatgut und/oder auf die auf der Saatmatte wachsenden Pflanzen abgestimmten Intensität und für eine auf das auf der Saatmatte fixierte Saatgut und/oder auf die auf der Saatmatte wachsenden Pflanzen abgestimmte Dauer abstrahlen.

Ausführungsbeispiele der Erfindung sind in den Figuren dargestellt und werden im Folgenden näher erläutert.

Es zeigen
- Figur 1: eine Vorrichtung zur Aufzucht von Pflanzen zum Einbringen von Saatmatten gemäß verschiedenen Ausführungsbeispielen;
- Figur 2A: eine Aufzuchteinheit zum Einbringen von Saatmatten gemäß verschiedenen Ausführungsbeispielen in den Aufnahmeraum der Vorrichtung zur Aufzucht von Pflanzen;
- Figur 2B: eine Bewässerungswanne einer Aufzuchteinheit;
- Figur 2C: einen Mattenträger zum Einsetzen auf eine Bewässerungswanne und zum Auflegen einer Saatmatte gemäß verschiedenen Ausführungsbeispielen;
- Figur 2D: eine Saatmatte gemäß verschiedenen Ausführungsbeispielen zum Auflegen auf einen Mattenträger;
- Figur 3: eine Saatmatte gemäß verschiedenen Ausführungsbeispielen zum Einbringen in eine Vorrichtung zur Aufzucht von Pflanzen;
- Figur 4: eine Saatmatte, auf die Saatgut aufgebracht wird, gemäß verschiedenen Ausführungsbeispielen;
- Figur 5: ein Verfahren zum Herstellen einer Saatmatte gemäß verschiedenen Ausführungsbeispielen;
- Figur 6A und Figur 6B: eine Saatmatte mit Saatgut gemäß verschiedenen Ausführungsbeispielen;
- Figur 7: eine Querschnittsdarstellung einer Saatmatte, auf die Saatgut aufgebracht ist, gemäß verschiedenen Ausführungsbeispielen;
- Figur 8: eine Saatmatte mit einer RFID-Kennzeichnung gemäß verschiedenen Ausführungsbeispielen;
- Figur 9: eine Vorrichtung zur Aufzucht von Pflanzen zum Aufnehmen einer Saatmatte gemäß verschiedenen Ausführungsbeispielen;

In der folgenden ausführlichen Beschreibung wird auf die beigefügten Zeichnungen Bezug genommen, die Teil dieser Anmeldung bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

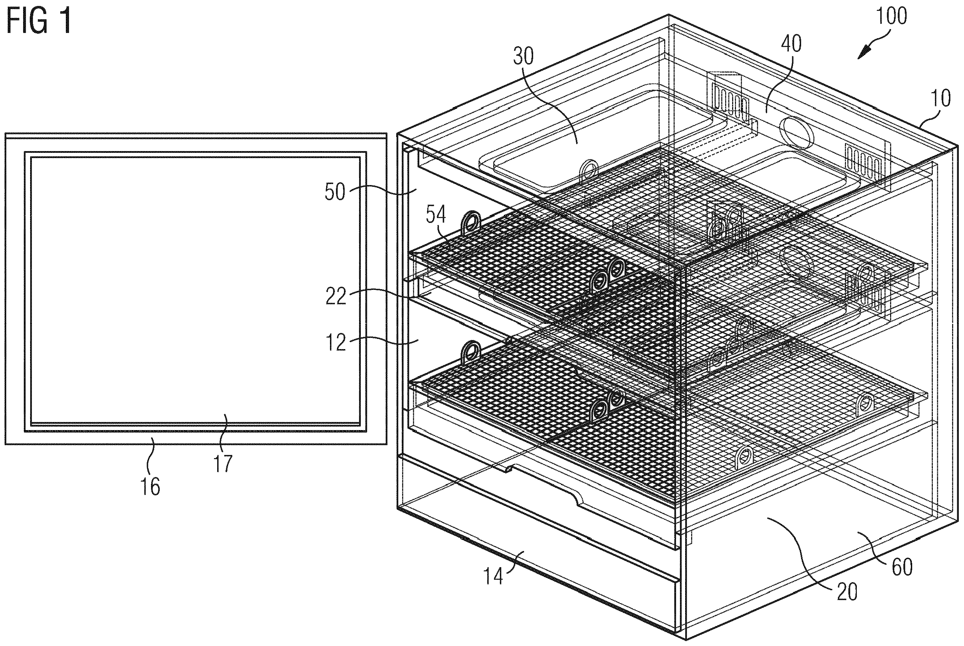

Eine Vorrichtung zur Aufzucht von Pflanzen zum Einbringen von Saatmatten gemäß verschiedenen Ausführungsbeispielen ist in Figur 1 dargestellt.

Wie in Fig.1 dargestellt, kann die Vorrichtung zur Aufzucht von Pflanzen 1 ein schrankartiges Gehäuse 10 aufweisen, das mit einem Aufnahmeraum 12, einer oberen Abdeckung 11, einem Sockel 14 und einer Tür 16, die eine Beobachtungsöffnung 17 aufweisen kann, ausgestattet sein kann. Des Weiteren kann die Vorrichtung 1 eine Bewässerungsvorrichtung 20 und mindestens eine Beleuchtungsvorrichtung 30 aufweisen. Ferner kann in der Vorrichtung 1 eine Steuerungseinheit 60 vorgesehen sein, die beispielsweise in dem Sockel 14 der Vorrichtung 1 untergebracht sein kann, wobei die Steuerungseinheit 60 mittels einer Programmsteuerung die Beleuchtungsvorrichtung 30 und die Bewässerungsvorrichtung 20 ansteuern kann. Alternativ kann die Steuerungseinheit 60 in der oberen Abdeckung 11 oder auf einer Rückseite des Gehäuses 10 angeordnet sein. Des Weiteren kann die Vorrichtung zur Aufzucht von Pflanzen 1 eine Klimatisierungseinrichtung 40 aufweisen, wobei die Steuerungseinheit 60 mittels der Programmsteuerung auch die Klimatisierungseinrichtung 40 ansteuern kann.

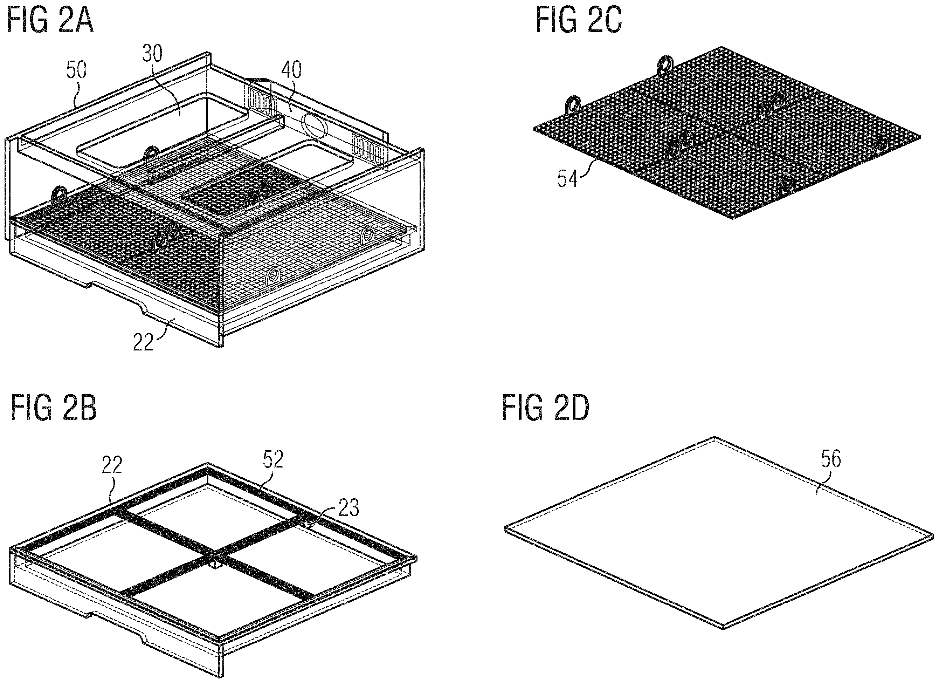

In den Aufnahmeraum 12 der Vorrichtung zur Aufzucht von Pflanzen 1 können, je nach Größe der Vorrichtung 1, eine oder mehrere schubladenartig ausgebildete Aufzuchteinheiten 50 eingebracht werden. Die Aufzuchteinheiten 50 können jeweils eine Bewässerungswanne 22 und einen oder mehrere Mattenträger 54 aufweisen und werden unter Bezugnahme auf Fig.2A bis Fig.2D beschrieben werden.

Fig.2A zeigt eine Aufzuchteinheit zum Einbringen von Saatmatten gemäß verschiedenen Ausführungsbeispielen in den Aufnahmeraum der Vorrichtung zur Aufzucht von Pflanzen. Fig.2B zeigt eine Bewässerungswanne einer Aufzuchteinheit. Fig.2C zeigt einen Mattenträger zum Einsetzen auf eine Bewässerungswanne und zum Auflegen einer Saatmatte gemäß verschiedenen Ausführungsbeispielen. Fig.2D zeigt eine Saatmatte gemäß verschiedenen Ausführungsbeispielen zum Auflegen auf einen Mattenträger.

Wie in Fig.2A dargestellt, kann jede Aufzuchteinheit 50 aus einer Bewässerungswanne 22 mit der dazugehörigen, darüber angeordneten Beleuchtungsvorrichtung 30 bestehen. Dabei kann jede Aufzuchteinheit 50 sozusagen ein Stockwerk definieren, in das Saatgut und Pflanzen in den Aufnahmeraum 12 der Vorrichtung eingebracht und dort aufgezogen werden kann bzw. können. Für diesen Zweck kann, wie in Fig.2B dargestellt, jede der Bewässerungswannen 22 eine vorzugsweise in sich unterteilte, rahmenartige Struktur aufweisen, die ein bis vier Einlegeöffnungen 52 bilden kann. Auf die rahmenartige Struktur der Einlegeöffnungen 52 können ein bis vier Mattenträger 54 (Fig.2C) unterschiedlicher Größe aufgelegt werden, die wiederum mit entsprechenden Saatmatten 56 (Fig.2D) bestückt werden können. Zudem kann jede Bewässerungswanne 22 einen WasserZulauf und -Ablauf 23 aufweisen.

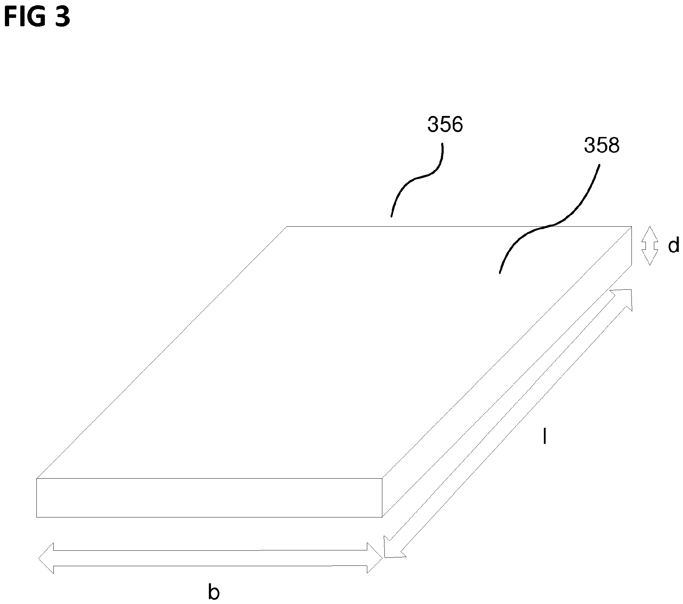

Fig.3 zeigt eine Saatmatte gemäß verschiedenen Ausführungsbeispielen zum Einbringen in eine Vorrichtung zur Aufzucht von Pflanzen.

Wie in Fig.3 dargestellt, kann die Saatmatte 356 im Wesentlichen quaderförmig sein. Dabei kann die Saatmatte 356 eine Breite b in einem Bereich von ungefähr 20 mm bis ungefähr 500 mm, optional in einem Bereich von ungefähr 100 mm bis ungefähr 300 mm, optional in einem Bereich von ungefähr 180 mm bis ungefähr 200 mm aufweisen. Des Weiteren kann die Saatmatte 356 eine Länge 1 in einem Bereich von ungefähr 20 mm bis ungefähr 500 mm, optional in einem Bereich von ungefähr 150 mm bis ungefähr 350 mm, optional in einem Bereich von ungefähr 200 mm bis ungefähr 250 mm aufweisen. Ferner kann die Saatmatte 356 eine Dicke d in einem Bereich von ungefähr 1 mm bis ungefähr 40 mm, optional in einem Bereich von ungefähr 1 mm bis ungefähr 20 mm, optional in einem Bereich von ungefähr 1 mm bis ungefähr 5 mm aufweisen. Dabei kann die Saatmatte 356 jedoch in Abhängigkeit davon, was für Abmessungen die Vorrichtung zur Aufzucht von Pflanzen 1, die darin verwendeten Aufzuchteinheiten 50, die Einlegeöffnungen 52 und/oder die verwendeten Mattenträger 54 aufweisen und was für Pflanzenarten in der jeweiligen Aufzuchteinheit 50 angebaut werden sollen, auch andere als die hier angegebenen Maße für die Länge l, die Breite b und die Dicke d aufweisen.

Die Saatmatte 356 kann ferner ein Trägersubstrat 358 aufweisen und kann dazu eingerichtet sein, Saatgut (nicht dargestellt) mittels eines Klebers (nicht dargestellt) auf dem Trägersubstrat 358 zu fixieren. Außerdem kann die Saatmatte 356 dazu eingerichtet sein, dass das darauf fixierte Saatgut keimen kann und daraus auf der Saatmatte 356 Pflanzen wachsen können. Zu diesem Zweck kann das Trägersubstrat 358 der Saatmatte 356 aus einem oder mehreren organischen Materialien, aus einem oder mehreren anorganischen Materialien oder einer Kombination aus einem oder mehreren organischen Materialien und einem oder mehreren anorganischen Materialien gebildet sein. Beispielsweise kann das Trägersubstrat 358 aus einem Material gebildet sein, das aus einer Gruppe bestehend aus Jute, Hanf, Steinwolle, Mineralwolle, Wolle, Wollfaser, Baumwolle, Cellulose, Viscose, Filz, Textilfaser, synthetischen Fasern, Eucalyptus Jiffy® Vitro-Plug™ oder Oasis® Floral Foam ausgewählt ist.

Bei Verwendung eines faserigen Materials für das Trägersubtrat 358 der Saatmatte 356 können die Fasern miteinander verwoben oder gefilzt oder gepresst sein, wobei das Material vorzugsweise keinen Kleber zum Verkleben der Fasern aufweist. Je nach erforderlicher Stabilität der Saatmatte 356 kann das Material des Trägersubstrats 358 jedoch auch einen Kleber aufweisen, wobei ein organischer Kleber bevorzugt ist. Dabei ist das Material des Klebers nicht auf organische Materialien beschränkt, sondern kann beispielsweise auch aus einem anorganischen Kleber bestehen.

Dabei weist das Trägersubstrat 358 bestimmte Eigenschaften, beispielsweise bezüglich seiner Wasseraufnahmekapazität und bezüglich seiner Lichtdurchlässigkeit, auf. Beispielsweise kann das Trägersubstrat 358 eine Wasseraufnahmekapazität aufweisen, die so groß ist, dass auf dem Trägersubstrat 358 fixiertes Saatgut keimen kann. Die Wasseraufnahmekapazität des Trägersubstrats 358, beispielsweise einer Matte aus dem Trägersubstrat 358 in einer Dicke von ungefähr 5 mm, kann beispielsweise in einem Bereich von ungefähr 3000 cm³ bis ungefähr 6000 cm³ pro Quadratmeter, beispielsweise in einem Bereich von ungefähr 3500 cm³ bis ungefähr 5000 cm³ pro Quadratmeter, beispielsweise in einem Bereich von ungefähr 4000 cm³ bis ungefähr 4500 cm³ pro Quadratmeter liegen.

Außerdem kann das Trägersubstrat 358 bzw. die Saatmatte 356 eine Lichtdurchlässigkeit (im Folgenden auch als Transmissionsgrad der Saatmatte 356 bzw. des Trägersubstrats 358 bezeichnet) aufweisen, die in einem Bereich von ungefähr 0% bis ungefähr 60%, optional in einem Bereich von ungefähr 0% bis ungefähr 40%, optional in einem Bereich von 0% bis ungefähr 20%, optional in einem Bereich von ungefähr 0% bis ungefähr 10% liegt. Dabei sollte die Lichtdurchlässigkeit der Saatmatte 356 gering sein, damit möglichst wenig Licht in den Raum unterhalb des Mattenträgers 54 (siehe Fig.2) in der Bewässerungswanne 22 der Aufzuchteinheit 50 fällt, da in diesen Raum einfallendes Licht das Wachstum von Algen in dem Wasser, das mittels der Bewässerungsvorrichtung 20 dem Saatgut bzw. den daraus wachsenden Pflanzen zugeführt wird, fördern würde.

Die Lichtdurchlässigkeit der Saatmatte 356 bzw. des Trägersubstrats 358 kann dabei der Median des Transmissionsgrads der Saatmatte 356 sein, ermittelt beispielsweise an fünf oder einer anderen beliebigen Anzahl von im Abstand voneinander angeordneten, gleichmäßig über die Fläche 1 x b der Saatmatte 356 verteilten Messpunkten, an denen der Transmissionsgrad des für das Trägersubstrat 358 verwendeten Materials in Richtung der Dicke d der Saatmatte 356 mittels Bestrahlens der Saatmatte 356 mit Licht ermittelt wird. Dabei wird der Transmissionsgrad des Materials beispielsweise unter Verwendung eines herkömmlichen Photometers (beispielsweise eines Luxmeters) ermittelt. Vorzugsweise wird dabei Licht der Lichtart CIE-D65 (beispielsweise nach ISO 13468) verwendet. Das Ermitteln des Transmissionsgrads des Trägersubstrats 358 bzw. der Saatmatte 356 ist jedoch nicht auf das hier beschriebene Vorgehen beschränkt.

Es ist zu bemerken, dass in verschiedenen Ausführungsbeispielen Elemente, Bauteile, Materialien, Wirkungen, Abmessungen, Abstände usw. von Vorrichtungen oder Teilen davon, welche im Zusammenhang mit Fig.1 bis Fig.9 beschrieben sind, denjenigen entsprechen können, welche im Zusammenhang mit anderen Figuren beschrieben sind. Dasselbe gilt im Hinblick auf Elemente, Bauteile, Materialien, Wirkungen, Abmessungen, Abstände usw. von Vorrichtung oder Teilen davon, die im Zusammenhang mit Fig.1 bis Fig.9 aufgeführt und erläutert sind, für Ausführungsbeispiele, die unter Bezugnahme auf irgendeine der anderen Figuren beschrieben sind. Auf eine Wiederholung kann deshalb verzichtet werden, und die Elemente, Bauteile, Materialien, Wirkungen, Abmessungen, Abstände usw. können mit denselben Bezugszeichen versehen sein. Es ist ferner zu beachten, dass die Liste der genannten Materialien aller beschriebenen Elemente nicht abschließend ist, sondern weitere Materialien verwendet werden können, wenn deren Verwendung sinnvoll ist.

Insbesondere ist zu bemerken, dass die oben im Zusammenhang mit Fig.3 beschriebenen Materialien, Größenangaben und/oder Eigenschaften der Saatmatte 356 auch für andere Ausführungsbeispiele der Saatmatte gelten, die im Vorangegangenen und im Folgenden im Zusammenhang mit anderen Figuren (bspw. im Zusammenhang mit der Saatmatte 56 der Fig.1 und Fig.2) beschrieben sind, auch wenn dies nicht ausdrücklich einzeln erwähnt ist. Dies gilt im Rahmen der gesamten Beschreibung, soweit nicht ausdrücklich zusätzliche und/oder alternative Angaben in Bezug auf ein verwendetes Material, eine verwendete Größenangabe und/oder Eigenschaften dieser verwendeten Materialien genannt sind.

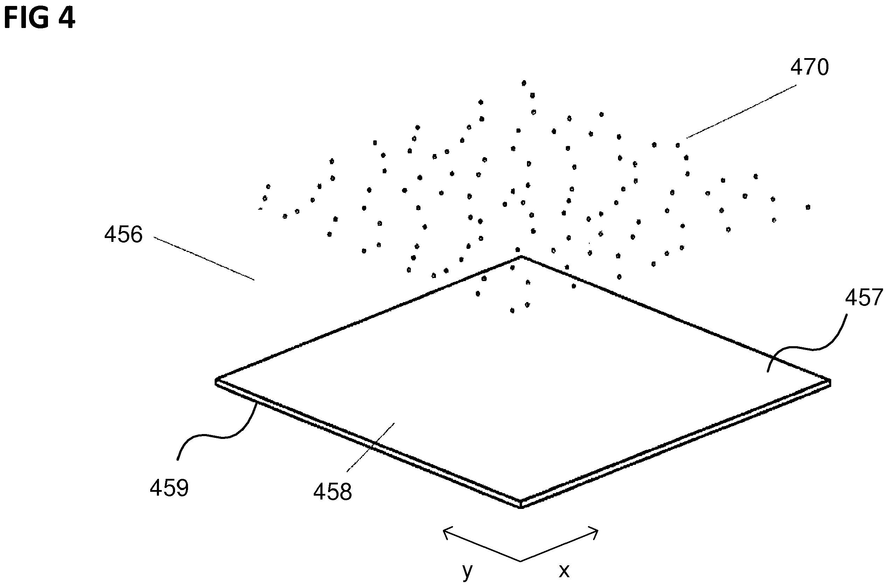

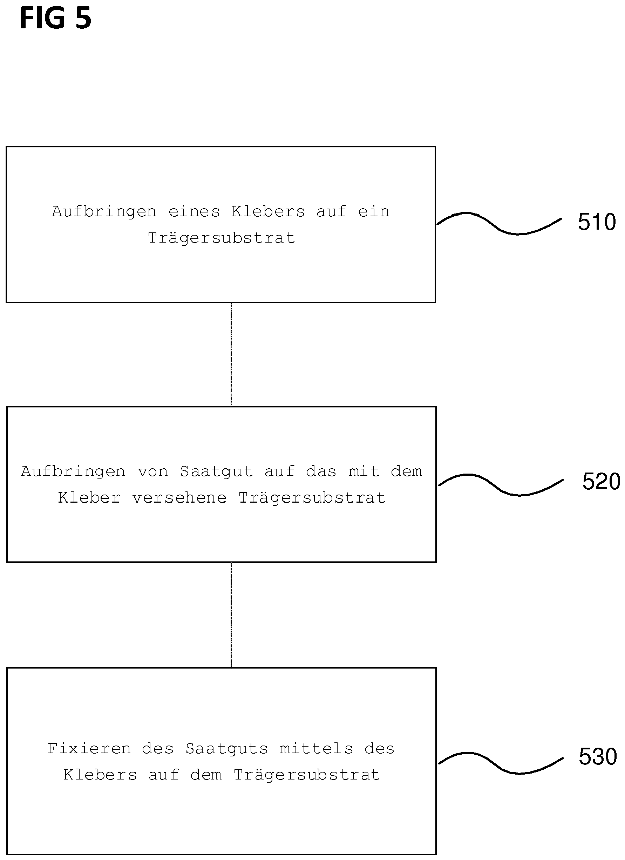

Fig.4 zeigt eine Saatmatte, auf die Saatgut aufgebracht wird, gemäß verschiedenen Ausführungsbeispielen. Fig.5 zeigt ein Verfahren zum Herstellen einer Saatmatte gemäß verschiedenen Ausführungsbeispielen.

Wie in Fig.4 dargestellt, weist ein Trägersubstrat 458 einer Saatmatte 456 eine Oberseite 457 und eine Unterseite 459 auf. Auf das Trägersubstrat 458 der Saatmatte 456 kann Saatgut 470 aufgebracht werden. Beispielsweise kann Saatgut 470 auf die Oberseite 457 des Trägersubstrats 458 aufgebracht werden.

Wie in Fig.5 dargestellt, weist ein Verfahren zum Herstellen einer Saatmatte Aufbringen eines Klebers auf ein Trägersubstrat, 510, Aufbringen von Saatgut auf das mit dem Kleber versehene Trägersubstrat, 520, und Fixieren des Saatguts mittels des Klebers auf dem Trägersubstrat, 530, auf. Dabei kann in dem Verfahren zum Herstellen einer Saatmatte der Kleber (nicht dargestellt in Fig.4) auf die Oberseite 457 des Trägersubstrats 458 der Saatmatte 456 aufgebracht werden. Dementsprechend kann das Saatgut 470 auf die mit dem Kleber versehene Oberseite 457 des Trägersubstrats 458 aufgebracht werden und mittels des Klebers auf der Oberseite 457 des Trägersubstrats 458 fixiert werden.

Dabei wird das Saatgut, beispielsweise das in der Fig.4 dargestellte Saatgut 470, gemäß verschiedenen Ausführungsbeispielen des Verfahrens derart auf dem Trägersubstrat, beispielsweise dem Trägersubstrat 458, beispielsweise der Oberseite 457 des Trägersubstrats 458, fixiert, dass das Saatgut 470 keimen kann und daraus auf der Saatmatte 456 Pflanzen wachsen können.

Das Trägersubstrat wird beispielsweise aus einem oder mehreren organischen Materialien, aus einem oder mehreren anorganischen Materialien oder einer Kombination aus einem oder mehreren organischen Materialien und einem oder mehreren anorganischen Materialien gebildet. Beispielsweise wird das Trägersubstrat 458 aus einem Material ausgewählt aus einer Gruppe bestehend aus Jute, Hanf, Steinwolle, Mineralwolle, Wolle, Wollfaser, Baumwolle, Cellulose, Viscose, Filz, Textilfaser, synthetischen Fasern, Eucalyptus Jiffy® Vitro-Plug™ oder Oasis® Floral Foam gebildet, wobei die Auswahl des Materials für das Trägersubstrat 458 nicht hierauf beschränkt ist.

Bei der Auswahl eines geeigneten Materials für das Trägersubstrat ist zu beachten, dass das verwendete Material den pH-Wert des Wassers in der Bewässerungseinrichtung um nicht mehr als ±1 verändert und den Leitwert des Wassers in der Bewässerungseinrichtung um nicht mehr als ±500 µS verändert. Außerdem ist das Material für das Trägersubstrat vorzugsweise lebensmittelverträglich, ebenso wie alle anderen für die Saatmatte verwendeten Materialien. Ferner kann das für die Saatmatten verwendete Material vorzugsweise Wasser absorbieren, wobei es vorzugsweise gleichzeitig über einen Zeitraum von mindestens vier Wochen auch im nassen oder feuchten Zustand seine Struktur beibehält. Des Weiteren ist das Saatmatten-Material vorzugsweise biologisch abbaubar.

Dabei kann, wie oben im Zusammenhang mit Fig.3 bereits ausgeführt, die Saatmatte 456 (bzw. das Trägersubstrat 458 der Saatmatte 456) eine Breite b (in Fig.4 nicht dargestellt) in einem Bereich von ungefähr 20 mm bis ungefähr 500 mm, optional in einem Bereich von ungefähr 100 mm bis ungefähr 300 mm, optional in einem Bereich von ungefähr 180 mm bis ungefähr 200 mm aufweisen. Des Weiteren kann die Saatmatte 456 (bzw. das Trägersubstrat 458 der Saatmatte 456) eine Länge 1 (in Fig.4 nicht dargestellt) in einem Bereich von ungefähr 20 mm bis ungefähr 500 mm, optional in einem Bereich von ungefähr 150 mm bis ungefähr 350 mm, optional in einem Bereich von ungefähr 200 mm bis ungefähr 250 mm aufweisen. Ferner kann die Saatmatte 456 (bzw. das Trägersubstrat 458 der Saatmatte 456) eine Dicke d (in Fig.4 nicht dargestellt) in einem Bereich von ungefähr 1 mm bis ungefähr 40 mm, optional in einem Bereich von ungefähr 1,5 mm bis ungefähr 20 mm, optional in einem Bereich von ungefähr 2 mm bis ungefähr 5 mm aufweisen. Dabei kann die Saatmatte 456 (bzw. das Trägersubstrat 458 der Saatmatte 456) jedoch in Abhängigkeit davon, was für Abmessungen die Vorrichtung zur Aufzucht von Pflanzen 1, die darin verwendeten Aufzuchteinheiten 50, die Einlegeöffnungen 52 und/oder die verwendeten Mattenträger 54 aufweisen und was für Pflanzenarten in der jeweiligen Aufzuchteinheit 50 angebaut werden sollen, auch andere als die hier angegebenen Maße für die Länge 1, die Breite b und die Dicke d aufweisen.

Als Kleber (nicht dargestellt in Fig.4) für das Saatgut 470 auf dem Trägersubstrat 458 kann beispielsweise ein organischer Kleber verwendet werden, ist jedoch nicht hierauf beschränkt, sondern es kann auch ein anorganischer Kleber verwendet werden. Der für das Fixieren des Saatguts 470 auf dem Trägersubstrat 458 verwendete Kleber ist vorzugsweise wasserlöslich. Dies kann beispielsweise ein auf Stärke basierender Kleber sein, jedoch können auch andere geeignete Materialien, die die Keimung des Saatguts 470 auf der Saatmatte 456 nicht ungünstig beeinflussen, verwendet werden. Beispielsweise können alternativ auch Cellulose oder Hydroxyethylcellulose (HEC) als Klebstoff oder auf diesen Substanzen basierende Kleber zum Fixieren des Saatguts 470 auf dem Trägersubstrat 458 verwendet werden. Der für das Fixieren des Saatguts 470 auf dem Trägersubstrat 458 verwendete Kleber kann ferner beispielsweise pflanzenspezifische Nährstoffe und/oder Mineralien und/oder das Wurzelwachstum anregende pflanzliche Hormone (beispielsweise Phytohormone) und/oder andere das Wachstum der Wurzeln und der Pflanzen anregende Substanzen, wie beispielsweise organische und/oder synthetische Auxine, aufweisen.

In dem Verfahren zum Herstellen einer Saatmatte 56, 456 kann der Kleber mittels verschiedener Verfahren auf das Trägersubstrat 458 aufgebracht werden. Beispielsweise kann der Kleber gemäß einem Ausführungsbeispiel des Verfahrens mittels einer oder mehrerer Walzen auf das Trägersubstrat 458 aufgebracht werden. Alternativ kann der Kleber in weiteren Ausführungsbeispielen beispielsweise mittels eines Sprühsystems oder mittels eines oder mehrerer Pinsel auf das Trägersubstrat 458 aufgebracht werden. Dabei kann als Kleber ein organischer Kleber verwendet werden. Beispielsweise kann zum Fixieren des Saatguts 470 auf dem Trägersubstrat 458 als Kleber ein auf Stärke oder Cellulose basierender Kleber verwendet werden. Dabei ist das Material des Klebers nicht auf organische Materialien beschränkt, sondern kann beispielsweise auch aus einem anorganischen Kleber bestehen.

Der Kleber kann in dem Verfahren zum Herstellen einer Saatmatte 56, 456 auf der gesamten Oberfläche 457 des Trägersubstrats 458 flächig aufgebracht werden oder kann an definierten Stellen der Oberfläche 457 des Trägersubstrats 458 punktuell und/oder in einem bestimmten (beispielsweise an die Größe des dort abzulegenden Saatguts 470 angepassten) Volumen aufgebracht werden.

Mittels des Aufbringens des Klebers auf das Trägersubstrat 458 wird dieses etwas angefeuchtet. Dabei sollte das Trägersubstrat 458 jedoch eine Feuchtigkeit aufweisen, die so gering ist, dass das Saatgut nicht zu keimen beginnt. Anders ausgedrückt sollte die in dem Kleber bzw. in dem Trägersubstrat 458 vorhandene Feuchtigkeit so gering sein, dass das Saatgut nicht zu keimen beginnt.

Es ist zu bemerken, dass der Kleber nicht in jedem Falle auf das Trägersubstrat 458 aufgebracht werden muss. Je nach Materialbeschaffenheit des Trägersubstrats 458 und der Art des darauf anzuordnenden Saatguts 470 kann der Kleber auch weggelassen werden.

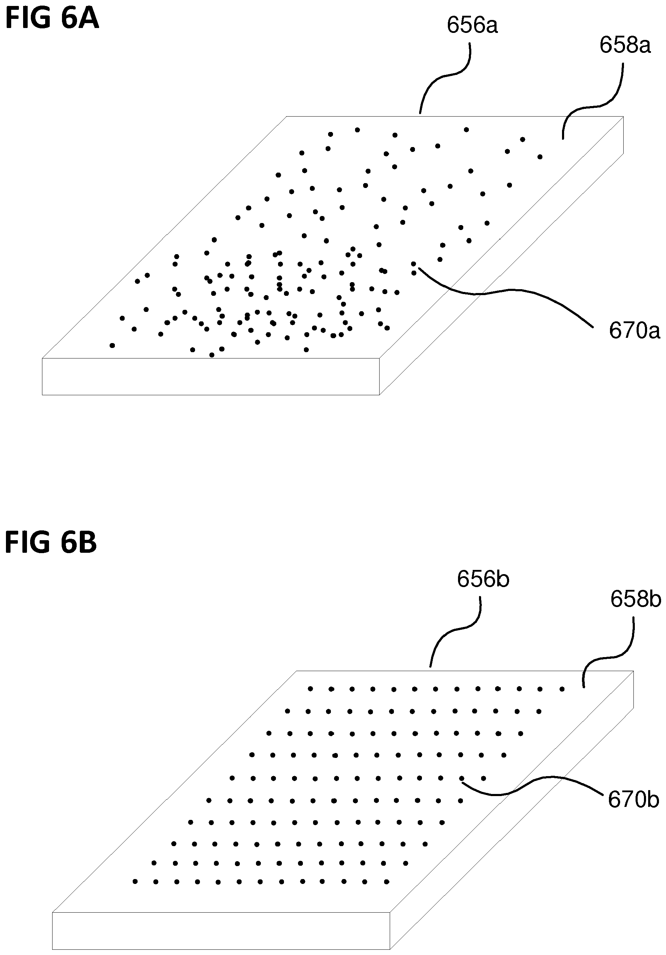

Nach dem Aufbringen des Klebers auf das Trägersubstrat 458 kann das Aufbringen von Saatgut des Verfahrens zum Herstellen einer Saatmatte 56, 456 das Aufbringen des Saatguts 470 auf den feuchten Kleber bzw. das feuchte Trägersubstrat 458 aufweisen. Dabei kann das Saatgut 470 beispielsweise aus Samen bzw. Saatkörnern bzw. Samenkörnern bestehen, wobei die Samen bzw. Saatkörner bzw. Samenkörner gestreut oder einzeln an einer bestimmten Position präzise abgelegt werden können (siehe auch Fig.6). Beispielsweise können die einzelnen Saatkörner des Saatguts 470 in einem mittleren Abstand voneinander in einem Bereich von ungefähr 0,5 mm bis ungefähr 50 mm, optional in einem Bereich von ungefähr 2 mm bis ungefähr 35 mm, optional in einem Bereich von ungefähr 5 mm bis ungefähr 25 mm auf die Saatmatte 456 aufgebracht werden. Dabei weisen die Saatkörner je nach Art der gewünschten Pflanze einen mittleren Durchmesser in einem Bereich von ungefähr 0,5 mm bis ungefähr 10 mm, optional in einem Bereich von ungefähr 1 mm bis ungefähr 6 mm auf.

Wenn die Saatkörner des Saatguts 470 großflächig auf das Trägersubstrat 458 aufgestreut werden, können diese unregelmäßig auf dem Trägersubstrat 458 verteilt sein, wobei Bereiche des Trägersubstrats 458 eine höhere Dichte und andere Bereiche des Trägersubstrats 458 eine geringere Dichte an Samenkörnern aufweisen können. Dabei kann die Dichte der Samenkörner, anders ausgedrückt der mittlere Abstand der Saatkörner zueinander, mittels der über einer definierten Fläche des Trägersubstrats 458 ausgebrachten, beispielsweise ausgestreuten, Menge an Saatgut 470 eingestellt werden.

Beim gezielten Ablegen der Saatkörner des Saatguts 470 können die Abstände der Saatkörner zueinander in einer x-Richtung der Saatmatte 456 und in einer y-Richtung der Saatmatte 456 eingestellt werden. Gegebenenfalls kann auf einer Saatmatte 56, 456 auch nur ein einzelnes Saatkorn angeordnet werden, beispielsweise bei kleineren, eher würfelförmigen Saatmatten 56, 456 und dem Aussäen von Pflanzen mit einem größeren Platzbedarf.

Als Saatgut 470 können in verschiedenen Ausführungsformen beispielsweise Samen von Salat, Kräutern, Obst und Gemüse und Myzele von Speisepilzen verwendet werden. Pflanzen, deren Samen zur Aufzucht in der Vorrichtung zur Aufzucht von Pflanzen auf das Trägersubstrat 458 aufgebracht werden können, sind beispielsweise Rucola, verschiedene Kressen, verschiedene Schnittsalate (bspw. Eichblattsalat, Feldsalat, Lollo-Arten u.a., aber auch sogenannte Baby-Leaf-Salate verschiedener Schnittsalate), Rauke (Eruca), Mangold, Rote Bete, verschiedene Kohlarten (Brassica), Blattsenf (Tatsoi), verschiedene Basilikumarten (Ocimum), Koriander, Dill (Anethum), Petersilie (Petroselinum), Möhren (Daucus), Rettich (Raphanus) und anderes Wurzelgemüse, Micro-Greens (junges, kleinblättriges Blattgemüse), verschiedene Arten von Baby-Kräutern und Baby-Gemüse, Zwergtomaten, Erdbeeren und Myzelien oder Sporen von Speisepilzen. Es ist zu bemerken, dass diese Liste nicht abschließend ist und Samen von weiteren Pflanzenarten, beispielsweise für medizinische Zwecke oder andere Zwecke nutzbare Pflanzenarten, die bis zum Verzehr der essbaren oder zum Verbrauch der zu verwendenden Pflanzenteile nicht zu groß auswachsen, und Myzelien oder Sporen von verschiedenen Speisepilzen zur Aufzucht in der Vorrichtung auf das Trägersubstrat 458 aufgebracht werden können.

In verschiedenen Ausführungsbeispielen ist kleineres Saatgut 470 mit einem mittleren Durchmesser der Samen bis ungefähr 3 mm besser geeignet für quaderförmige Saatmatten 456 mit einer Fläche (b x 1) in einem Format in einem Bereich von ungefähr (150 mm x 250 mm), optional in einem Bereich von ungefähr (180 mm x 235 mm) mit einer Dicke d in einem Bereich von ungefähr 1 mm bis ungefähr 10 mm, optional in einem Bereich von ungefähr 2 mm bis ungefähr 5 mm, optional in einem Bereich von ungefähr 3 mm bis ungefähr 4 mm, ist jedoch nicht hierauf beschränkt. Größeres Saatgut 470 mit einem mittleren Durchmesser der Samen in einem Bereich von ungefähr 3 mm bis ungefähr 10 mm ist besser geeignet für dickere quaderförmige Saatmatten 456 mit einer Fläche (b x 1) in einem Format in einem Bereich von ungefähr (150 mm x 250 mm), optional in einem Bereich von ungefähr (80 mm x 100 mm), optional in einem Bereich von ungefähr (30 mm x 50 mm) mit einer Dicke d in einem Bereich von ungefähr 3 mm bis ungefähr 50 mm, optional in einem Bereich von ungefähr 10 mm bis ungefähr 40 mm, optional in einem Bereich von ungefähr 15 mm bis ungefähr 30 mm, oder würfelförmige Saatmatten 456 in einem Format von ungefähr (30 mm x 30 mm) mit einer Dicke d von ungefähr 30 mm, ist jedoch nicht hierauf beschränkt. Dabei können größere Samen des Saatguts 470 mit einem mittleren Durchmesser in einem Bereich von ungefähr 3 mm bis ungefähr 10 mm einzeln oder in einer geringen Anzahl von ungefähr 1 bis ungefähr 5 Samenkörnern auf eine würfelförmige Saatmatte 456 aufgebracht werden.

In verschiedenen Ausführungsbeispielen können Samen verschiedener Pflanzen auf einer einzelnen Saatmatte 456 aufgebracht werden. Anders ausgedrückt können gemischte Samen verschiedener Pflanzen zusammen, anders ausgedrückt in einer Mischung, auf einer Saatmatte 456 zusammen fixiert werden. Insbesondere können beispielsweise verschiedene Arten einer Gattung, beispielsweise rotes und grünes Basilikum der Gattung Ocimum, oder sogar verschiedene Arten unterschiedlicher Gattungen, beispielsweise verschiedene Salatarten (z.B. Blattsenf, Rucola und Tatsoi) oder Kräuter (z.B. Thai-Basilikum und Koriander) zusammen auf einer Saatmatte 456 fixiert werden.

Beim Anbau von Speisepilzen können alternativ auch Pilzmyzelien oder Pilzsporen auf das Trägersubstrat 458 aufgebracht werden. Dazu kann das Trägersubstrat 458 ebenfalls mit einem Kleber und/oder Feuchtigkeit präpariert werden, bevor die Pilzmyzelien oder die Pilzsporen auf das Trägersubstrat 458 aufgebracht werden.

Anschließend kann das Trägersubstrat 458 mit dem darauf aufgebrachten Saatgut 470 bzw. dem darauf aufgebrachten Pilzmyzel getrocknet werden. Das Trocknen des Trägersubstrats 458 bzw. des Klebers auf dem Trägersubstrat 458 kann einfach an der Luft erfolgen und/oder kann mittels Wärme und/oder mittels eines Luftstroms beschleunigt werden.

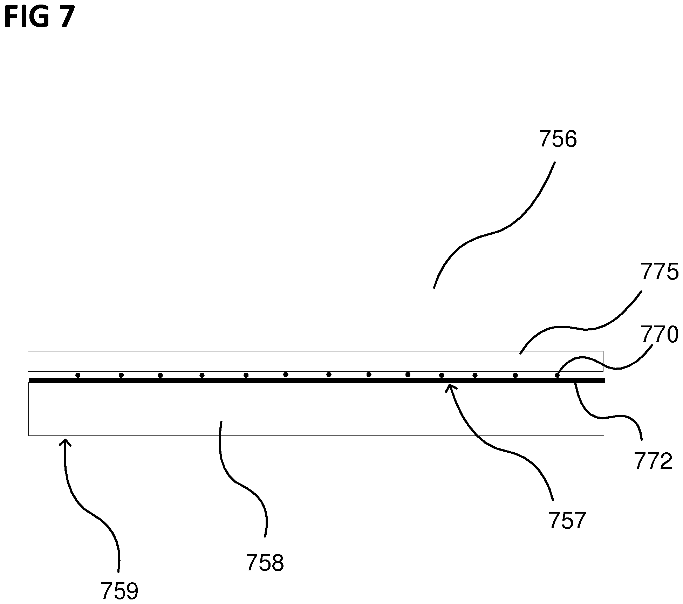

In verschiedenen Ausführungsbeispielen kann das Saatgut 470 mittels Aufbringens einer dünnen Auflageschicht (nicht dargestellt; siehe Fig.7) über dem Saatgut 470 zusätzlich auf der Saatmatte 456 fixiert werden. Insbesondere beim Aufbringen von größerem Saatgut 470, das einen mittleren Durchmesser beispielsweise im Bereich von ungefähr 3 mm bis ungefähr 10 mm aufweist, kann es hilfreich sein, dieses mittels der Auflageschicht auf dem Trägersubstrat 458 zusätzlich zu fixieren bzw. zu sichern. Dabei kann die Auflageschicht den Druck erhöhen, mit dem die Saatkörner auf dem Trägersubstrat 458 fixiert sind, wodurch außerdem die Auflagefläche des Saatguts 470 auf dem Trägersubstrat 458 erhöht wird gegenüber einem Zustand ohne eine zusätzliche Fixierung mittels einer Auflageschicht. Dies kann bewirken, dass eine Feuchtigkeit, von der ein einzelnes Saatkorn beim Anfeuchten der Saatmatte 456, beispielsweise beim Keimen, umgeben ist, erhöht ist gegenüber einem Zustand ohne die Auflageschicht, was den Keimungsvorgang günstig beeinflussen kann. Beim Aufbringen von kleinerem Saatgut 470, das einen mittleren Durchmesser beispielsweise im Bereich von ungefähr 1 mm bis ungefähr 3 mm aufweist, kann die Auflageschicht meist weggelassen werden. Jedoch kann das Aufbringen der Auflageschicht auch bei Verwendung des kleineren Saatguts 470 vorgenommen werden und kann auch bei Verwendung des größeren Saatguts 470 weggelassen werden, wenn dies jeweils aus anderen Gründen sinnvoll erscheint.

Es ist zu beachten, dass je nach der Art des ausgesäten Saatguts 470 und der Materialbeschaffenheit des Trägersubstrats 458 der Kleber weggelassen werden kann. Insbesondere bei Verwendung einer Auflageschicht ist es gegebenenfalls nicht notwendig, das Trägersubstrat 458 mit dem Kleber zu versehen. Jedoch kann Saatgut 470 auch auf dem Trägersubstrat 458 angeordnet werden, ohne dass ein Kleber und/oder eine Auflageschicht verwendet werden.

In dem Verfahren zum Herstellen der Saatmatte 456 kann das Trägersubstrat 458 mit dem Kleber, dem Saatgut 470 und/oder der Auflageschicht versehen werden, solange das Trägersubstrat 458 noch in einem größeren Format vorliegt als die später gewünschte Größe der Saatmatte 456. Beispielsweise kann das Trägersubstrat 458 in einer großen Länge und/oder in einer großen Breite hergestellt und in aufgerollter Form gelagert werden. Vor dem Aufbringen des Klebers auf das Trägersubstrat 458 kann beispielsweise ein längeres Stück der Trägersubstrat-Rolle abgerollt werden. Anschließend können der Kleber und das Saatgut 470 in gewünschter Weise auf das Trägersubstrat 458 aufgebracht werden, das nachfolgend getrocknet und dann in die zur Auslieferung an den Kunden gewünschte Größe der Saatmatten 456 zugeschnitten werden kann.

Fig.6A und Fig.6B zeigen jeweils eine Saatmatte mit Saatgut gemäß verschiedenen Ausführungsbeispielen.

Wie in Fig.6A dargestellt, kann eine Saatmatte 656a ein Trägersubstrat 658a aufweisen, auf dem Saatgut 670a fixiert ist, wobei die Samen des Saatguts 670a derart über das Trägersubstrat 658a verteilt sind, dass die Samen unregelmäßig darauf verteilt sind. Anders ausgedrückt kann die Saatmatte 656a mindestens einen Bereich aufweisen, in dem die Samenkörner des Saatguts 670a dicht (anders ausgedrückt in einem geringen Abstand zueinander) beieinander liegen, und kann mindestens einen Bereich aufweisen, in dem die Samenkörner des Saatguts 670a weniger dicht (anders ausgedrückt in einem größeren Abstand) zueinander liegen. Dabei liegt der Abstand zwischen den Samenkörnern beispielsweise in einem Bereich von ungefähr 1 mm bis ungefähr 200 mm, vorzugsweise in einem Bereich von ungefähr 5 mm bis ungefähr 100 mm, vorzugsweise in einem Bereich von ungefähr 10 mm bis ungefähr 50 mm. Dazu können in dem Verfahren zum Herstellen der Saatmatte 656a die Samen des Saatguts 670a ungeordnet über das Trägersubstrat 658a gestreut werden und so darauf fixiert werden.

Wie in Fig.6B dargestellt, kann eine Saatmatte 656b alternativ dazu ein Trägersubstrat 658b aufweisen, auf dem Saatgut 670b fixiert ist, wobei die Samen des Saatguts 670b derart über das Trägersubstrat 658b verteilt sind, dass die Samenkörner einzeln an einer bestimmten Position liegen. Anders ausgedrückt weist die Saatmatte 656b mindestens einen Bereich auf, in dem die Saatkörner regelmäßig in einem Abstand zueinander angeordnet sind. Dabei kann der Abstand zwischen den Samenkörnern beispielsweise in einem Bereich von ungefähr 1 mm bis ungefähr 200 mm liegen, vorzugsweise in einem Bereich von ungefähr 5 mm bis ungefähr 100 mm, vorzugsweise in einem Bereich von ungefähr 10 mm bis ungefähr 50 mm. Alternativ dazu kann die Saatmatte 656b auch verschiedene Bereiche aufweisen, in denen die Saatkörner in unterschiedlichen regelmäßigen Anordnungen verteilt sind, beispielsweise einen ersten Bereich, in dem die Samen dicht beieinander, in regelmäßigen Abständen zueinander angeordnet sind, und einen zweiten Bereich, in dem die Samen in größeren regelmäßigen Abständen zueinander als in dem ersten Bereich angeordnet sind (nicht dargestellt). Zum Herstellen einer Saatmatte 656b, wie sie in Fig.6B dargestellt ist, können in dem Verfahren zum Herstellen der Saatmatte 656b die Samen des Saatguts 670b einzeln an einer bestimmten Position des Trägersubstrats 658b präzise abgelegt werden.

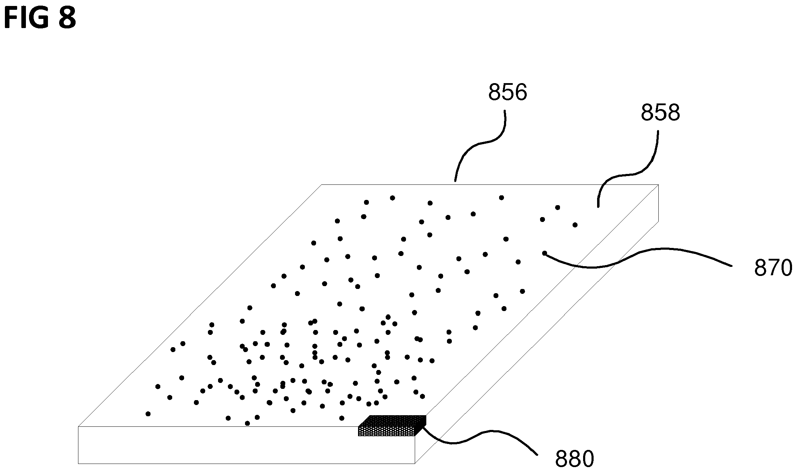

Es ist zu bemerken, dass der Einfachheit der Darstellung halber in Fig.6A und Fig.6B ein in einigen Ausführungsbeispielen der Saatmatten 656a, 656b zum Fixieren des Saatguts 670a, 670b auf dem Trägersubstrat 658a, 658b aufgebrachter Kleber nicht dargestellt ist. Ebenso ist zu bemerken, dass die unter Bezugnahme auf Fig.6A und Fig.6B beschriebenen Saatmatten 656a, 656b die unter Bezugnahme auf irgendeine der vorangegangenen Abbildungen Fig.1 bis Fig.5 beschriebenen Ausgestaltungen aufweisen können. Beispielsweise können die Ausgestaltungen der Saatmatten 656a, 656b bezüglich Größe, Dicke, Materialien und Anordnungen der Bestandteile die gleichen sein, wie bei der oben unter Bezugnahme auf Fig.3 beschriebenen Saatmatte 356 und werden hier nicht wiederholt. Ebenso sind weitere Ausgestaltungsmöglichkeiten der Saatmatten 656a, 656b, wie sie im Folgenden unter Bezugnahme auf Fig.7 und Fig.8 beschrieben werden, möglich, und die Saatmatten 656a, 656b sind nicht auf die hier gewählten Darstellungen beschränkt.

Fig.7 zeigt eine Querschnittsdarstellung einer Saatmatte, auf die Saatgut aufgebracht ist, gemäß verschiedenen Ausführungsbeispielen.

Wie in Fig.7 dargestellt, kann eine Saatmatte 756 ein Trägermaterial 758 aufweisen, auf dessen Oberseite 757 Saatgut 770 aufgebracht ist. Dabei kann das Saatgut mittels eines Klebers 772 auf der Oberseite 757 des Trägermaterials 758 fixiert sein. Des Weiteren kann die Saatmatte 756 eine Auflageschicht 775 aufweisen, die über dem Saatgut 770 angeordnet ist. Das Saatgut 770 kann in verschiedenen Ausführungsbeispielen alternativ mittels der Auflageschicht 775 auf dem Trägersubstrat 758 derart fixiert sein, dass der Kleber 772 zwischen dem Trägermaterial 758 und dem Saatgut 770 weggelassen werden kann. Außerdem kann die Auflageschicht 775 selber einen Kleber (nicht dargestellt) aufweisen, mittels dessen das Saatgut 770 auf dem Trägersubstrat 758 fixiert wird. In weiteren Ausführungsbeispielen kann die Saatmatte 756 auch lediglich das Trägersubstrat 758 und das Saatgut 770 aufweisen, wobei sowohl der Kleber 772 als auch die Auflageschicht 775 weggelassen werden können.

In verschiedenen Ausführungsbeispielen einer Saatmatte kann das Saatgut 770 mittels der dünnen Auflageschicht 775 über dem Saatgut 770 zusätzlich auf der Saatmatte 756 fixiert sein. Entsprechend kann in dem Verfahren zum Herstellen einer Saatmatte in verschiedenen Ausführungsbeispielen das Saatgut 770 mittels Aufbringens der dünnen Auflageschicht 775 über dem Saatgut 770 zusätzlich auf dem Trägersubstrat 758 fixiert werden.

Die Auflageschicht 775 kann eine Dicke in einem Bereich von ungefähr 0,05 mm bis ungefähr 0,5 mm, optional in einem Bereich von ungefähr 0,06 mm bis ungefähr 0,3 mm, optional in einem Bereich von ungefähr 0,07 mm bis ungefähr 0,1 mm aufweisen. Die Auflageschicht 775 kann beispielsweise aus Cellulose gebildet sein, ist jedoch nicht hierauf beschränkt. Beispielsweise kann die Auflageschicht 775 auch aus Zellstoff oder anderen organischen Materialien, die sich in der genannten geringen Dicke in geeigneter Weise herstellen lassen, gebildet sein. Alternativ kann in dem Verfahren zum Herstellen einer Saatmatte die Auflageschicht 775 gebildet werden, indem flüssige Cellulose, beispielsweise als Hydroxyethylcellulose (HEC), derart auf das das Saatgut 770 aufweisende Trägersubstrat 758 aufgebracht wird, dass nach dem Trocknen eine sehr dünne Celluloseschicht zurückbleibt und das Saatgut 770 auf dem Trägersubstrat 658 fixiert.

Wie oben unter Bezugnahme auf Fig.4 bereits ausgeführt, kann es hilfreich sein, insbesondere beim Aufbringen von größerem Saatgut 770, das einen mittleren Durchmesser beispielsweise im Bereich von ungefähr 3 mm bis ungefähr 10 mm aufweist, dieses mittels der Auflageschicht 775 auf dem Trägersubstrat 758 zu fixieren bzw. zu sichern. Dabei kann die Auflageschicht 775 den Druck erhöhen, mit dem die Saatkörner auf dem Trägersubstrat 758 fixiert sind, wodurch außerdem die Auflagefläche des Saatguts 770 auf dem Trägersubstrat 758 erhöht wird gegenüber einem Zustand ohne eine zusätzliche Fixierung mittels der Auflageschicht 775. Dies kann bewirken, dass eine Feuchtigkeit, von der ein einzelnes Saatkorn beim Anfeuchten der Saatmatte 756, beispielsweise beim Keimen, umgeben ist, erhöht ist gegenüber einem Zustand ohne die Auflageschicht 775, was den Keimungsvorgang günstig beeinflussen kann. Beim Aufbringen von kleinerem Saatgut 770, das einen mittleren Durchmesser beispielsweise im Bereich von ungefähr 1 mm bis ungefähr 3 mm aufweist, kann die Auflageschicht 775 meist weggelassen werden. Jedoch kann das Aufbringen der Auflageschicht 775 auch bei Verwendung des kleineren Saatguts 770 vorgenommen werden und kann auch bei Verwendung des größeren Saatguts 770 weggelassen werden, wenn dies aus anderen Gründen sinnvoll erscheint.

Die Auflageschicht 775 kann in verschiedenen Ausführungsbeispielen derart ausgeführt sein, dass sie die gesamte obere Oberfläche 757 des Trägersubstrats 758 der Saatmatte 756 überdeckt, wie in Fig.7 dargestellt. Alternativ kann die Auflageschicht 775 in verschiedenen Ausführungsbeispielen auch derart ausgeführt sein, dass sie nur einen Teil der oberen Oberfläche 757 des Trägersubstrats 758 überdeckt (nicht dargestellt).

In Fig.7 ist das Saatgut 770 auf der Saatmatte 756 der Einfachheit der Darstellung halber in regelmäßigen Abständen zueinander dargestellt. Jedoch ist die Saatmatte 756 nicht hierauf beschränkt, sondern das Saatgut 770 kann auch unregelmäßig oder in unterschiedlichen regelmäßigen Abständen auf dem Trägersubstrat 758 angeordnet sein, wie oben unter Bezugnahme auf Fig.6A und Fig.6B beschrieben.

Es ist zu bemerken, dass die für die Saatmatte 756 und ihre Bestandteile geeigneten Materialien, Größen, Dicken und Anordnungen die gleichen sein können, wie die oben unter Bezugnahme auf eine der Fig.3 bis Fig.6 beschriebenen, und hier nicht wiederholt werden.

In verschiedenen Ausführungsbeispielen kann die Saatmatte 756 mit einer Düngermatte (nicht dargestellt) verbunden sein. Anders ausgedrückt kann die Saatmatte 756 dazu eingerichtet sein, mit einer Düngermatte verbunden zu werden. Beispielsweise kann eine Düngermatte auf einer Unterseite 759 des Trägersubstrats 758 angeordnet sein. Dabei kann die Düngermatte auf der Unterseite 759 des Trägersubstrats befestigt sein. Beispielsweise kann die Düngermatte unter Verwendung eines Klebers, wie beispielsweise eines auf Stärke oder Cellulose basierenden Klebers, mit dem Trägersubstrat 758 verbunden sein. Alternativ kann die Düngermatte mittels Nähens, Tackerns, Heftens oder einer anderen geeigneten Befestigungsweise an dem Trägersubstrat 758 befestigt sein. Dabei werden vorzugsweise lebensmittelverträgliche Materialien (sogenannte "food safe"-Materialien) verwendet.

Die Düngermatte kann eine Düngersubstanz aufweisen. Beispielsweise kann die Düngermatte mit der Düngersubstanz getränkt sein oder kann mit der Düngersubstanz beschichtet sein. Alternativ kann die Düngersubstanz auch direkt auf die Saatmatte 756 aufgebracht werden. Dabei kann als Düngersubstanz beispielsweise eine flüssige Düngersubstanz verwendet werden, die mittels Walzens, Sprühens oder unter Verwendung von Pinseln auf die Trägersubstanz 758 aufgebracht werden kann. Dabei kann die Düngersubstanz derart ausgeführt sein, dass der Dünger von den Wurzeln der auf der Saatmatte 756 wachsenden Pflanzen aufgenommen werden kann. Beispielsweise kann sich in einem Ausführungsbeispiel der Dünger in dem der Bewässerungswanne zugeführten Wasser auflösen und hierdurch in den Wasserkreislauf zur Bewässerung der in die Vorrichtung aufgenommenen Pflanzen gelangen, wobei der Dünger in jedem Bewässerungszyklus wieder an die Wurzeln der auf dem Trägersubstrat 758 wachsenden Pflanzen gepumpt wird.

Die Saatmatte 756 kann so ausgeformt sein, dass sie stapelbar ist. Anders ausgedrückt kann die Saatmatte 756 dazu eingerichtet sein, gestapelt zu werden. Ferner kann die Saatmatte 756 dazu eingerichtet sein, mit der Düngermatte gestapelt zu werden.

Die Saatmatte 756 gemäß den hierin beschriebenen Ausführungsbeispielen kann dazu eingerichtet sein, auf einen Mattenträger 54 (siehe Fig.2C) aufgelegt zu werden. Dabei kann der Mattenträger 54 in eine Einlegeöffnung 52 einer Bewässerungswanne 22 (siehe Fig.2B) eingelegt werden, und die Bewässerungswanne 22 kann in eine Aufzuchteinheit 50 eines Aufnahmeraums 12 einer Vorrichtung zur Aufzucht von Pflanzen 1 (siehe Fig.1) eingebracht werden. Anders ausgedrückt kann die Saatmatte 756 dazu eingerichtet sein, in den Aufnahmeraum 12 einer Vorrichtung zur Aufzucht von Pflanzen 1 aufgenommen zu werden. Wiederum anders ausgedrückt kann die Vorrichtung zur Aufzucht von Pflanzen 1 einen Aufnahmeraum 12 aufweisen, der dazu eingerichtet sein kann, eine oder mehrere Saatmatten 756 aufzunehmen. Dabei kann der Aufnahmeraum 12 dazu eingerichtet sein, eine oder mehrere Saatmatten 756 und eine oder mehrere Düngermatten aufzunehmen, wobei jeweils eine Düngermatte auf dem Mattenträger 54 unter einer jeweiligen Saatmatte 756 angeordnet ist.

Fig.8 zeigt eine Saatmatte mit einer RFID-Kennzeichnung gemäß verschiedenen Ausführungsbeispielen.

Wie in Fig.8 dargestellt, kann eine Saatmatte 856 in verschiedenen Ausführungsbeispielen eine RFID-Kennzeichnung 880 aufweisen. Dabei kann die RFID-Kennzeichnung 880 an dem Trägersubstrat 858 befestigt sein. Die RFID-Kennzeichnung 880 kann beispielsweise als RFID-Chip oder als RFID-Tag (anders ausgedrückt als RFID-Transponder; anders ausgedrückt als RFID-Etikett) ausgeführt sein. Alternativ dazu oder zusätzlich kann die Saatmatte 856 einen QR-Tag (anders ausgedrückt ein QR-Etikett; anders ausgedrückt eine QR-Kennzeichnung) (nicht dargestellt) und/oder ein Barcode-Etikett (anders ausgedrückt eine Barcode-Kennzeichnung; anders ausgedrückt ein Barcode-Etikett) (nicht dargestellt) aufweisen. Die RFID-Kennzeichnung 880 bzw. die QR-Kennzeichnung bzw. der Barcode kann mittels Klebens, Heftens, Tackerns, Klemmens und/oder Nähens an der Saatmatte 856 befestigt sein. Die RFID-Kennzeichnung 880 bzw. die QR-Kennzeichnung bzw. der Barcode kann vorzugsweise aus einem wasserabweisenden Material gebildet sein. Alternativ kann das RFID-Etikett 880 in einem Etikett aus einem wasserabweisenden Material verpackt sein, das wiederum an der Saatmatte 856 befestigt sein kann.

Die RFID-Kennzeichnung 880 bzw. die QR-Kennzeichnung bzw. der Barcode kann eine Länge in einem Bereich von ungefähr 2 cm bis ungefähr 6 cm, optional in einem Bereich von ungefähr 2,5 cm bis ungefähr 5 cm, optional in einem Bereich von ungefähr 3 cm bis ungefähr 4 cm aufweisen und kann eine Breite in einem Bereich von ungefähr 0,5 cm bis ungefähr 4 cm, optional in einem Bereich von ungefähr 1 cm bis ungefähr 3 cm, optional in einem Bereich von ungefähr 1,5 cm bis ungefähr 2 cm aufweisen.

Entsprechend kann ein Programmsensor der Steuerungseinheit (Bezugszeichen 60, siehe Fig.1) der Vorrichtung zur Aufzucht von Pflanzen 1 als RFID-Sensor und/oder QR-Code Sensor und/oder Barcode-Sensor vorgesehen sein. Anders ausgedrückt kann die Steuerungseinheit 60 mittels der RFID-Signale der RFID-Kennzeichnung 880 bzw. der QR-Kennzeichnung bzw. des Barcodes der Saatmatte 856 das auf der Saatmatte 856 angeordnete Saatgut 870 identifizieren. Anders ausgedrückt kann die Steuerungseinheit 60 mittels der an einer spezifischen Saatmatte 856 befestigten RFID-Kennzeichnung 880 bzw. QR-Kennzeichnung bzw. Barcode eineindeutig die Saatmatte 856 sowie das mit der Saatmatte 856 in den Aufnahmeraum 12 der Vorrichtung zur Aufzucht von Pflanzen 1 eingebrachte Saatgut 870 bestimmen. Zu diesem Zweck können an die Steuerungseinheit 60 eine oder mehrere RFID-Antennen angeschlossen sein. Dabei kann beispielsweise für jeden Mattenträger, auf den eine Saatmatte 856 aufgelegt werden kann, eine RFID-Antenne vorgesehen sein.

Bei Verwendung eines RFID-Chips als RFID-Kennzeichnung 880 können verschiedene Daten bezüglich des auf dem Trägersubstrat 858 fixierten Saatguts 870 auf dem RFID-Chip gespeichert sein. Ferner können zusätzlich verschiedene Daten bezüglich der Saatmatte 856 auf dem RFID-Chip gespeichert sein. Diese auf dem RFID-Chip gespeicherten Daten können beispielsweise Daten betreffend einen Namen des Saatguts 870, eine Sorte des Saatguts 870, eine Spezies des Saatguts 870, einen Hersteller des Saatguts 870, eine LOT-Nummer des Saatguts 870, ein Herstellungsjahr der Saatmatte 856 und/oder eine Registrierungsnummer, beispielsweise des Herstellers und/oder des Vertreibers der Saatmatte 856 sein, sind jedoch hierauf nicht beschränkt. Ferner können die auf dem RFID-Chip gespeicherten Daten beispielsweise auch Daten betreffend individuell auf das auf den Saatmatten 856 fixierte Saatgut 870 abgestimmte Klimatisierungsdaten und/oder Bewässerungsdaten und/oder Beleuchtungsdaten sein.

Alternativ dazu kann die Steuerungseinheit 60 dazu eingerichtet sein, nach dem Identifizieren des auf der Saatmatte 856 angeordneten Saatguts 870 mittels der RFID-Signale bzw. der QR-Kennzeichnung bzw. des Barcodes der Saatmatte 856 die auf das jeweilige Saatgut 870 abgestimmten Klimatisierungsdaten und/oder Bewässerungsdaten und/oder Beleuchtungsdaten aus einem Datenspeicher abzurufen. Dabei kann der Datenspeicher vorzugsweise über eine in der Vorrichtung zur Aufzucht von Pflanzen 1 vorgesehene Internetverbindung als externer Datenspeicher vorgesehen sein. Anders ausgedrückt kann die Steuerungseinheit 60 dazu eingerichtet sein, mittels einer Internetverbindung, die mittels entsprechender Antennen der Vorrichtung zur Aufzucht von Pflanzen 1 bereitgestellt wird, entsprechende Daten aus dem externen Datenspeicher abzurufen. Der externe Datenspeicher kann Teil einer Datenwolke (Cloud) sein, in der Daten und Applikationsprogramme verteilt und optional redundant gespeichert sein können.

Es ist zu bemerken, dass in Fig.8 das Saatgut 870 auf der Saatmatte 856 der Einfachheit der Darstellung halber in unregelmäßigen Abständen zueinander dargestellt ist. Jedoch ist die Saatmatte 856 nicht hierauf beschränkt, sondern das Saatgut 870 kann auch regelmäßig oder in unterschiedlichen regelmäßigen Abständen auf dem Trägersubstrat 858 angeordnet sein, wie oben unter Bezugnahme auf Fig.6A und Fig.6B beschrieben.

Außerdem kann die mit der RFID-Kennzeichnung 880 bzw. der QR-Kennzeichnung bzw. dem Barcode versehene Saatmatte 856 in verschiedenen Ausführungsbeispielen mit einer Düngermatte (nicht dargestellt) verbunden sein. Ferner kann die mit der RFID-Kennzeichnung 880 bzw. der QR-Kennzeichnung bzw. dem Barcode versehene Saatmatte 856 dazu eingerichtet sein, gestapelt zu werden.

Des Weiteren ist zu bemerken, dass die für die Saatmatte 856 und ihre Bestandteile geeigneten Materialien, Größen, Dicken und Anordnungen die gleichen sein können, wie die oben unter Bezugnahme auf eine der Fig.3 bis Fig.7 beschriebenen, und hier nicht wiederholt werden.

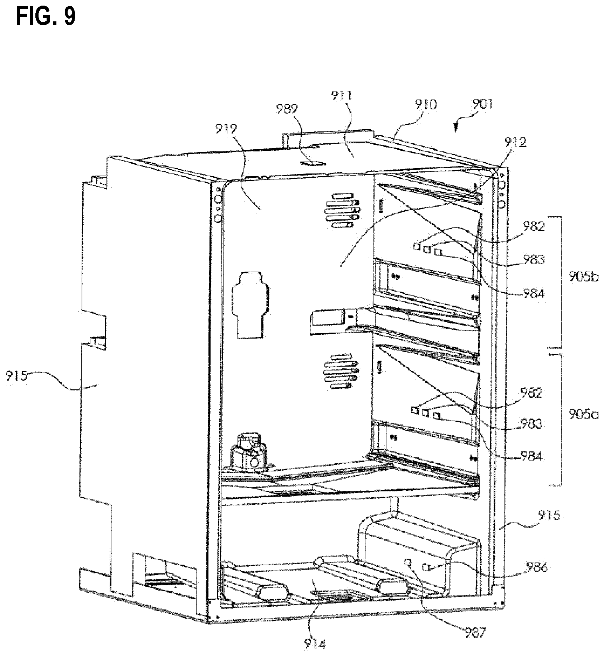

Fig.9 zeigt eine Vorrichtung zur Aufzucht von Pflanzen zur Aufnahme einer Saatmatte mit einer RFID-Kennzeichnung gemäß verschiedenen Ausführungsbeispielen. Wie in Fig.9 dargestellt, weist die Vorrichtung zur Aufzucht von Pflanzen 901 ein schrankartiges Gehäuse 910 auf, das hier aus einer halbfrontalen Perspektive dargestellt ist. Eine Tür und eine vordere Seitenwand eines Sockels 914 des Gehäuses 910 sind der Einfachheit halber in dieser Darstellung weggelassen.

Wie in Fig. 9 dargestellt, kann die Vorrichtung zur Aufzucht von Pflanzen 901 einen Aufnahmeraum 912 aufweisen, in den mittels einer in Fig.1 und Fig.2A dargestellten Aufzuchteinheit 50 eine oder mehrere mit Saatgut versehene Saatmatten eingebracht werden können. Dabei können die eine oder mehreren Saatmatten Saatmatten 856 sein, die eine RFID-Kennzeichnung 880 bzw. eine QR-Kennzeichnung bzw. einen Barcode aufweisen können, wie in Fig.8 dargestellt.

Wie des Weiteren in Fig.9 dargestellt, kann die Vorrichtung zur Aufzucht von Pflanzen 901 mindestens eine RFID-Antenne 982 bzw. einen RFID-Sensor 982 und eine RFID-Lesevorrichtung 986 zum Empfangen bzw. Auslesen von RFID-Signalen der RFID-Kennzeichnung 880 aufweisen. Zusätzlich oder alternativ zu den RFID-Antennen 982 und der RFID-Lesevorrichtung 986 kann die Vorrichtung 901 mindestens einen QR-Code-Sensor 983 und/oder mindestens einen Barcode-Sensor 984 und entsprechende Lesevorrichtungen 987 aufweisen, welche die QR-Kennzeichnung bzw. den Barcode der mindestens einen Saatmatte 856 zur Steuerung der Programmsteuerung erfassen und auslesen können.

Beispielsweise kann die Steuerungseinheit 60 dazu eingerichtet sein, sämtliche Signale der RFID-Antennen 982 bzw. der RFID-Sensoren 982, der RFID-Lesevorrichtung 986, der QR-Code-Sensoren 983, der Barcode-Sensoren 984 und der entsprechenden Lesevorrichtungen 987 auszuwerten, dadurch das eingebrachte Saatgut 870 zu identifizieren und mittels der Programmsteuerung für dieses Saatgut 870 geeignete Klimatisierungsdaten zur Klimatisierung des Aufnahmeraums 912 festzulegen. Anders ausgedrückt kann die Vorrichtung 901 mindestens einen Programmsensor aufweisen, wobei der Programmsensor als RFID-Sensor 982 und/oder QR-Code Sensor 983 und/oder Barcode-Sensor 984 vorgesehen ist, welcher RFID-Signale bzw. die QR-Kennzeichnung bzw. den Barcode von der mindestens einen Saatmatte 856 zur Steuerung der Programmsteuerung erfassen kann. Dadurch kann die Steuerungseinheit 60 dazu eingerichtet sein, mittels der Programmsteuerung auf Basis der Klimatisierungsdaten ein auf das Saatgut 870 in der entsprechenden Aufzuchteinheit 50 abgestimmtes Innenraumklima in dem Aufnahmeraum 912 herzustellen.

Die RFID-Antennen 982 bzw. die RFID-Sensoren 982 (und/oder der QR-Code-Sensor 983 und/oder der Barcode-Sensor 984) können in Seitenwänden 915 der Vorrichtung 901 angeordnet sein. Die RFID-Lesevorrichtung 986 (und oder die entsprechenden anderen Lesevorrichtungen 987) kann an einer Rückseitenwand 919 der Vorrichtung 901 angeordnet sein oder kann in einem Sockel 914 der Vorrichtung 901 in der Nähe der Steuerungseinheit 60 (in Fig.9 nicht dargestellt) angeordnet sein. Beispielsweise kann jeweils eine RFID-Antenne 982 in einem einem unteren Stockwerk 905a (definiert beispielsweise mittels einer in einem unteren Teil des Aufnahmeraums 912 aufgenommenen Aufzuchteinheit 50 (hier nicht dargestellt)) entsprechenden Bereich des Aufnahmeraums 912 und in einem einem oberen Stockwerk 905b (definiert beispielsweise mittels einer in einem oberen Teil des Aufnahmeraums 912 aufgenommenen Aufzuchteinheit 50 (hier nicht dargestellt)) entsprechenden Bereich des Aufnahmeraums 912 angeordnet sein. Alternativ kann jeweils eine RFID-Antenne 982 derart in jeder der Seitenwände 915 angeordnet sein, dass jede der einen oder mehreren auf jeweils einen Mattenträger 54 (in Fig.9 nicht dargestellt) aufgebrachten Saatmatten 856 einzeln identifiziert werden kann. Anders ausgedrückt kann die Vorrichtung 901 dazu eingerichtet sein, mittels der RFID-Antennen 982 Saatgut 870 bzw. Pflanzen zu identifizieren, das auf jeder der einen bis mehreren Saatmatten 856, die auf den jeweiligen Mattenträger 54 im unteren Stockwerk 905a bzw. im oberen Stockwerk 905b aufgelegt sind, aufgebracht ist, wobei jede der Saatmatten 856 dazu eine RFID-Kennzeichnung 880 aufweist.

Alternativ kann die Vorrichtung 901, wie oben beschrieben, in verschiedenen Ausführungsbeispielen ferner dazu eingerichtet sein, sich mittels WLAN mit dem Internet zu verbinden. Dazu kann die Vorrichtung 901 eine WLAN-Antenne 989, beispielsweise eine WiFi-Antenne, aufweisen. Beispielsweise kann die WLAN-Antenne 989 in einer oberen Abdeckung 911 der Vorrichtung 901 angeordnet sein. Die Steuerungseinheit 60 kann außerdem dazu eingerichtet sein, mittels der Internetverbindung über das Internet in einem externen Datenspeicher, beispielsweise einer Cloud, gespeicherte Daten abzurufen. Beispielsweise kann die Steuerungseinheit 60 dazu eingerichtet sein, in der Cloud gespeicherte Daten bezüglich des in den Aufnahmeraum 912 eingebrachten Saatguts bzw. der daraus wachsenden Pflanzen abzurufen.

Wie oben unter Bezugnahme auf Fig.8 bereits ausgeführt, kann die Steuerungseinheit 60 dazu eingerichtet sein, mittels der RFID-Antennen 982 bzw. RFID-Sensoren 982 und der RFID-Lesevorrichtung 986 die entsprechenden, mittels der Saatmatten 856 in den Aufnahmeraum 912 eingebrachten RFID-Kennzeichnungen 880 zu lesen und zu identifizieren. Ferner kann die Steuerungseinheit dazu eingerichtet sein, Informationen zu dem auf der jeweiligen Saatmatte 856 aufgebrachten und mittels der jeweiligen RFID-Kennzeichnung 880 identifizierten Saatgut 870 (bzw. zu den auf der jeweiligen Saatmatte 856 ausgekeimten Pflanzen) aus einem Programmspeicher abzurufen. Beispielsweise kann die Steuerungseinheit 60 dazu eingerichtet sein, Informationen bezüglich des in den Aufnahmeraum 912 eingebrachten Pflanzentyps, seiner exakten Positionierung innerhalb des Aufnahmeraums 912 und einer Wachstumsphase der Pflanzen aus dem Programmspeicher auszulesen. Außerdem kann die Steuerungseinheit 60 in verschiedenen Ausführungsbeispielen dazu eingerichtet sein, basierend auf den ausgelesenen Informationen zu dem eingebrachten Pflanzentyp, seiner Positionierung im Aufnahmeraum 912 und der Wachstumsphase eine Anweisung bezüglich dem für das weitere Wachstum der Pflanzen förderlichen Innenraumklima aus dem Programmspeicher auszulesen.

Alternativ oder zusätzlich kann die Steuerungseinheit 60 außerdem beispielsweise dazu eingerichtet sein, in der Cloud gespeicherte Daten bezüglich der jeweiligen Bedürfnisse des eingebrachten Pflanzentyps, seiner jeweiligen Wachstumsphase und/oder seines Zustands in Bezug auf die Lufttemperatur, die Luftfeuchtigkeit, die spektrale Zusammensetzung des zur Beleuchtung verwendeten Lichtes, die Beleuchtungsintensität, die Beleuchtungsdauer und das Zuführen von Wasser und Nährstoffen abzurufen.

Des Weiteren kann die Steuerungseinheit 60 dazu eingerichtet sein, nachfolgend die Bewässerungsvorrichtung 20, die Beleuchtungsvorrichtung 30 und die Klimatisierungseinrichtung 40 auf Basis der individuell auf das Saatgut 870 abgestimmten Klimatisierungsdaten und/oder Bewässerungsdaten und/oder Beleuchtungsdaten anzusteuern.

Beispielsweise kann die Steuerungseinheit 60 dazu eingerichtet sein, auf Basis der aus der Cloud abgerufenen Daten Regelgrößen für die Lufttemperatur, die Luftfeuchtigkeit, die spektrale Zusammensetzung des zur Beleuchtung verwendeten Lichtes, die Beleuchtungsintensität, die Beleuchtungsdauer und das Befüllen der Bewässerungswannen festzulegen und an die Klimatisierungseinrichtung 40, die Beleuchtungsvorrichtung 30 und/oder die Bewässerungsvorrichtung 20 auszugeben. Entsprechend kann die Steuerungseinheit 60 dazu eingerichtet sein, die Klimatisierungseinrichtung 40, die Beleuchtungsvorrichtung 30 und/oder die Bewässerungsvorrichtung 20 derart anzusteuern, dass die Lufttemperatur, die Luftfeuchtigkeit, die spektrale Zusammensetzung des zur Beleuchtung verwendeten Lichtes, die Beleuchtungsintensität, die Beleuchtungsdauer und/oder das Befüllen der Bewässerungswannen 22 entsprechend den spezifischen Bedürfnissen der in den Aufnahmeraum 12, 912 eingebrachten bzw. wachsenden Pflanzen eingestellt wird.

Beispielsweise kann die Steuerungseinheit 60 dazu eingerichtet sein, die Bewässerungsvorrichtung 20 auf Basis der individuell auf das Saatgut 870 abgestimmten Bewässerungsdaten und/oder Daten zum Nährstoffbedarf derart ansteuern, dass den in den Aufnahmeraum 912 eingebrachten Saatmatten 856 bzw. dem darauf fixierten Saatgut 870 bzw. den darauf wachsenden Pflanzen eine dem Keimen der Samen bzw. dem Wachstum der Pflanzen förderliche Wassermenge und/oder Nährstoffmenge und/oder Nährstoffzusammensetzung zuzuführen. Außerdem kann die Steuerungseinheit 60 der Vorrichtung zur Aufzucht von Pflanzen 901 dazu eingerichtet sein, mittels der Programmsteuerung und der Klimatisierungseinrichtung 40 auf Basis der Klimatisierungsdaten in dem Aufnahmeraum 912 ein auf das auf der Saatmatte 856 fixierte Saatgut 870 und/oder auf die auf der Saatmatte 856 wachsenden Pflanzen abgestimmtes Innenraumklima einzustellen. Ferner kann die Steuerungseinheit 60 der Vorrichtung zur Aufzucht von Pflanzen 901 dazu eingerichtet sein, mittels der Programmsteuerung auf Basis der Beleuchtungsdaten das auf der in den Aufnahmeraum 912 eingebrachten Saatmatte 856 fixierte Saatgut 870 und/oder die auf der Saatmatte 856 wachsenden Pflanzen mittels der Beleuchtungsvorrichtung 30 mit Licht einer der Keimung und/oder dem Wachstum der Pflanzen förderlichen Dauer und/oder spektralen Zusammensetzung (anders ausgedrückt Wellenlängenzusammensetzung) zu bestrahlen.

Wiederum bezugnehmend auf Fig.8 kann die Saatmatte 856 dazu eingerichtet sein, dass die RFID-Kennzeichnung 880 bzw. die QR-Kennzeichnung bzw. der Barcode abgetrennt werden kann. Anders ausgedrückt kann die RFID-Kennzeichnung 880 bzw. die QR-Kennzeichnung bzw. der Barcode abtrennbar ausgestaltet sein. Wiederum anders ausgedrückt kann das RFID-Etikett 880 bzw. die QR-Kennzeichnung bzw. der Barcode dazu eingerichtet sein, von der Saatmatte 856 abgetrennt zu werden.

Entsprechend der oben beschriebenen Ausstattung der Saatmatte 856 mit einer RFID-Kennzeichnung 880 bzw. einer QR-Kennzeichnung bzw. einem Barcode kann das Verfahren zum Herstellen einer Saatmatte, wie oben unter Bezugnahme auf Fig.4 und Fig.5 beschrieben, in verschiedenen Ausführungsbeispielen ferner ein Kennzeichnen der Saatmatte 856 mittels eines RFID-Etiketts 880 und/oder einer QR-Kennzeichnung und/oder eines Barcodes aufweisen. Dabei kann die RFID-Kennzeichnung 880 bzw. die QR-Kennzeichnung bzw. der Barcode mittels Klebens, Heftens, Tackerns, Klemmens und/oder Nähens an der Saatmatte 856 befestigt werden. Die RFID-Kennzeichnung 880 bzw. die QR-Kennzeichnung bzw. der Barcode kann vorzugsweise aus einem wasserabweisenden Material gebildet werden. Alternativ kann das RFID-Etikett 880 in einem Etikett aus einem wasserabweisenden Material verpackt werden, das wiederum an der Saatmatte 856 befestigt werden kann.

Dabei kann das RFID-Etikett 880 bzw. die QR-Kennzeichnung bzw. der Barcode das auf der Saatmatte 856 fixierte Saatgut 870 codieren. Ferner kann das Kennzeichnen der Saatmatte 856 in verschiedenen Ausführungsbeispielen mittels eines RFID-Chips 880 vorgenommen werden, wobei der RFID-Chip 880 Daten betreffend einen Namen des Saatguts 870, eine Sorte des Saatguts 870, eine Spezies des Saatguts 870, einen Hersteller des Saatguts 870, eine LOT-Nummer des Saatguts 870, ein Herstellungsjahr der Saatmatte 856 und/oder eine Registrierungsnummer, beispielsweise des Herstellers und/oder des Vertreibers der Saatmatte 856 und/oder ferner Daten betreffend individuell auf das auf den Saatmatten 856 fixierte Saatgut 870 abgestimmte Klimatisierungsdaten und/oder Bewässerungsdaten und/oder Beleuchtungsdaten aufweisen kann. Das Etikett mit der RFID-Kennzeichnung 880 bzw. der QR-Kennzeichnung bzw. dem Barcode kann beispielsweise Logos des Herstellers und/oder des Vertreibers und/oder den Namen der Pflanze und/oder einen QR-Code aufweisen, wobei diese Angaben vorzugsweise aufgedruckt sind.

Unter Verwendung einer oder mehrerer der oben beschriebenen Saatmatten 56 (bzw. der unter Bezugnahme auf Fig.3 bis Fig.8 beschriebenen Saatmatten 356, 456, 656, 756 und/oder 856) und der unter Bezugnahme auf Fig.1, Fig.2 und Fig.9 beschriebenen Vorrichtung zur Aufzucht von Pflanzen 1, 901 kann ein Verfahren zur Aufzucht von Pflanzen bereitgestellt werden, das Herstellen einer oder mehrerer Saatmatten 56 gemäß einem Verfahren zum Herstellen einer Saatmatte, wie oben unter Bezugnahme auf Fig.5 und Fig.8 beschrieben, Einbringen der einen oder mehreren mit Saatgut versehenen Saatmatten 56 in einen Aufnahmeraum 12, 912 der Vorrichtung zur Aufzucht von Pflanzen 1, 901 und Bereitstellen von Umgebungsbedingungen derart, dass das Saatgut auf der einen oder mehreren Saatmatten 56 keimen kann und daraus Pflanzen wachsen können, mittels der Vorrichtung 1, 901, aufweist.

Alternativ dazu kann ein Verfahren zur Aufzucht von Pflanzen bereitgestellt werden, das Herstellen einer oder mehrerer Saatmatten 56 (bzw. der unter Bezugnahme auf Fig.3 bis Fig.8 beschriebenen Saatmatten 356, 456, 656, 756 und/oder 856) gemäß einem Verfahren zum Herstellen einer Saatmatte 56, wie oben unter Bezugnahme auf Fig.5 und Fig.8 beschrieben, Bereitstellen von ersten Umgebungsbedingungen derart, dass das Saatgut auf der einen oder mehreren Saatmatten 56 keimen kann und daraus Pflanzen wachsen können, Unterbrechen des Wachstumsprozesses mittels geeigneter zweiter Umgebungsbedingungen, Einbringen der einen oder mehreren Saatmatten 56, auf denen Pflanzen wachsen, in einen Aufnahmeraum 12, 912 einer Vorrichtung zur Aufzucht von Pflanzen 1, 901 und Bereitstellen von dritten Umgebungsbedingungen derart, dass die Pflanzen weiter wachsen und gegebenenfalls Früchte tragen können, mittels der Vorrichtung 1, 901, aufweist.

Dabei können die Umgebungsbedingungen beispielsweise eine Lufttemperatur, eine Luftfeuchtigkeit, eine Wasserzufuhr, eine Nährstoffzufuhr, eine Beleuchtungsqualität, eine Beleuchtungsintensität und/oder eine Beleuchtungsdauer betreffen, wobei die Umgebungsbedingungen nicht auf diese Parameter beschränkt sind.

Mittels des ersten vorgenannten Verfahrens kann ein Nutzer mittels Einbringens einer mit Saatgut versehenen Saatmatte 56 in den Aufnahmeraum 12, 912 der Vorrichtung zu Aufzucht von Pflanzen 1, 901 das Saatgut beispielsweise zuerst Umgebungsbedingungen aussetzen, die günstig zum Auskeimen des Saatguts sind. Dies kann beispielsweise bedeuten, dass der Saatmatte 56 mittels der Bewässerungsvorrichtung 20 so viel Wasser zugeführt wird, dass die Saatmatte 56 benetzt wird, so dass das Saatgut von der zum Auskeimen notwendigen Feuchtigkeit umgeben ist. Nach dem Auskeimen kann die Steuerungseinheit 60 die Bewässerungsvorrichtung 20 derart ansteuern, dass die Saatmatten 56 selber nicht mehr benetzt werden, sondern nur den Wurzeln der ausgekeimten Samenkörner Wasser und Nährstoffe zum Wachsen und für eine eventuelle Fruchtbildung und -reifung zugeführt werden. Dabei kann die Steuerungseinrichtung 60 die Beleuchtungsvorrichtung
30 und die Klimatisierungseinrichtung 40 in analoger Weise zum Erzielen entsprechender optimaler Umgebungsbedingungen für die unterschiedlichen Wachstumsphasen der eingebrachten Samen bzw. Pflanzen ansteuern.

Mittels des zweiten vorgenannten Verfahrens wird dem Nutzer dagegen eine Möglichkeit bereitgestellt, innerhalb kürzerer Wachstumsphasen erntereife Produkte zu erzielen, indem Saatmatten 56 bereitgestellt werden, deren Samen beispielsweise bereits vor der Abgabe an den Nutzerin einem Gewächshaus ersten Umgebungsbedingungen ausgesetzt waren, in denen die Samen keimen konnten. In einem zweiten Abschnitt des Verfahrens wird das ausgekeimte Saatgut dann zweiten Umgebungsbedingungen ausgesetzt, die das weitere Wachstum unterbrechen oder zumindest verzögern, so dass ein Zeitraum entsteht, der beispielsweise für einen Transport zum Nutzer verwendet werden kann. In einer dritten Phase bringt der Nutzer die Saatmatten 56 mit dem ausgekeimten, aber noch nicht erntereifen Saatgut beispielsweise in den Aufnahmeraum 12, 912 seiner eigenen Vorrichtung zur Aufzucht von Pflanzen 1, 901 ein, wobei dort dritte Umgebungsbedingungen eingestellt werden, so dass weiteres Wachstum der Pflanzen und eventuelle Fruchtbildung und -reifung bis zu einem erntefähigen Zustand angeregt wird.

Dieses zweite der vorgenannten Verfahren ist jedoch nicht auf das oben ausgeführte Beispiel beschränkt, sondern kann beispielsweise auch vom Nutzer selber durchgeführt werden, wenn er bereits ausgekeimtes Saatgut mit der Saatmatte 56 aus seiner Vorrichtung zur Aufzucht von Pflanzen 1, 901 entnimmt und stattdessen in den Kühlschrank stellt, um weiteres Wachstum zu unterbrechen, während er in Urlaub fährt, und danach wiederum mittels erneuten Einbringens der Saatmatte 56 in seine Vorrichtung 1, 901 innerhalb eines Zeitraums erntefähige Produkte ziehen zu können, der kürzer ist als ein Zeitraum, den der gesamte Wachstumsprozess inklusive Auskeimens erfordern würde.

In einem Verfahren zur Aufzucht von Pflanzen kann die Vorrichtung zur Aufzucht von Pflanzen 1, 901 ferner mittels eines Programmsensors einer Programmsteuerung das auf der Saatmatte 56 fixierte Saatgut identifizieren. Dabei kann der Programmsensor als RFID-Sensor und/oder QR-Code Sensor und/oder Barcode-Sensor eingerichtet sein und kann RFID-Signale des RFID-Etiketts bzw. die QR-Kennzeichnung bzw. den Barcode von mindestens einer in den Aufnahmeraum 12, 912 der Vorrichtung 1, 901 eingebrachten Saatmatte 56 zur Steuerung der Programmsteuerung erfassen.

In dem Verfahren kann die Programmsteuerung des Weiteren aus einem Datenspeicher individuell auf das identifizierte Saatgut abgestimmte Klimatisierungsdaten und/oder Bewässerungsdaten und/oder Beleuchtungsdaten abrufen. Dabei kann der Datenspeicher als externer Datenspeicher vorgesehen sein. Die Programmsteuerung kann die Daten mittels einer Internetverbindung aus einem externen Datenspeicher abrufen.

Alternativ dazu kann die Vorrichtung zur Aufzucht von Pflanzen 1, 901 in dem Verfahren Daten zu auf der Saatmatte 56 fixiertem Saatgut und/oder zu der Saatmatte 56 aus einem an der Saatmatte 56 angebrachten RFID-Chip abrufen. Dabei können die auf dem RFID-Chip gespeicherten Daten Daten betreffend einen Namen des Saatguts, eine Sorte des Saatguts, eine Spezies des Saatguts, einen Hersteller des Saatguts, eine LOT-Nummer des Saatguts, ein Herstellungsjahr der Saatmatte 56 und/oder eine Registrierungsnummer, beispielsweise des Herstellers und/oder des Vertreibers, der Saatmatte 56 sein. Ferner können die auf dem RFID-Chip gespeicherten Daten Daten betreffend individuell auf das auf den Saatmatten 56 fixierte Saatgut abgestimmte Klimatisierungsdaten und/oder Bewässerungsdaten und/oder Beleuchtungsdaten sein.

Wiederum alternativ dazu kann die Steuerungseinheit 60 nach dem Identifizieren des auf der Saatmatte 56 angeordneten Saatguts mittels der RFID-Signale bzw. der QR-Kennzeichnung bzw. des Barcodes der Saatmatte 56 die auf das jeweilige Saatgut abgestimmten Klimatisierungsdaten und/oder Bewässerungsdaten und/oder Beleuchtungsdaten aus einem Datenspeicher abrufen. Dabei kann der Datenspeicher vorzugsweise über eine in der Vorrichtung zur Aufzucht von Pflanzen 1, 901 vorgesehene Internetverbindung als externer Datenspeicher vorgesehen sein. Anders ausgedrückt kann die Steuerungseinheit 60 mittels einer Internetverbindung, die mittels entsprechender Antennen der Vorrichtung zur Aufzucht von Pflanzen 1, 901 bereitgestellt wird, entsprechende Daten aus dem externen Datenspeicher abrufen. Der externe Datenspeicher kann Teil einer Datenwolke (Cloud) sein, in der Daten und Applikationsprogramme verteilt und optional redundant gespeichert sein können.

Zu diesem Zweck kann die Vorrichtung 1, 901 mindestens eine RFID-Antenne bzw. einen RFID-Sensor und eine RFID-Lesevorrichtung aufweisen, mittels derer in dem Verfahren RFID-Signale der RFID-Kennzeichnung empfangen bzw. ausgelesen werden können. Zusätzlich oder alternativ kann die Vorrichtung 1, 901 mittels mindestens eines QR-Code-Sensors und/oder mindestens eines Barcode-Sensors und entsprechenden Lesevorrichtungen die QR-Kennzeichnung bzw. den Barcode der mindestens einen Saatmatte 56 zur Steuerung der Programmsteuerung erfassen und auslesen.

Beispielsweise kann die Steuerungseinheit 60 sämtliche Signale der RFID-Antennen bzw. der RFID-Sensoren, der RFID-Lesevorrichtung, der QR-Code-Sensoren, der Barcode-Sensoren und der entsprechenden Lesevorrichtungen lesen und auswerten, dadurch das in den Aufnahmeraum 12, 912 eingebrachte Saatgut identifizieren und Informationen zu dem auf der jeweiligen Saatmatte 56 aufgebrachten und mittels der jeweiligen RFID-Kennzeichnung identifizierten Saatgut (bzw. zu den auf der jeweiligen Saatmatte ausgekeimten Pflanzen) aus einem Programmspeicher abrufen. Beispielsweise kann die Steuerungseinheit 60 Informationen bezüglich des in den Aufnahmeraum 12, 912 eingebrachten Pflanzentyps, seiner exakten Positionierung innerhalb des Aufnahmeraums 12, 912 und einer Wachstumsphase der Pflanzen aus dem Programmspeicher auslesen. Außerdem kann die Steuerungseinheit 60 basierend auf den ausgelesenen Informationen zu dem eingebrachten Pflanzentyp, seiner Positionierung im Aufnahmeraum 12, 912 und der Wachstumsphase eine Anweisung bezüglich der für das weitere Wachstum der Pflanzen förderliche Innenraumklima aus dem Programmspeicher auslesen. Ferner kann die Steuerungseinheit 60 mittels der Programmsteuerung für dieses Saatgut bzw. diese Pflanzen geeignete Klimatisierungsdaten zur Klimatisierung des Aufnahmeraums 12, 912 festlegen.

Anders ausgedrückt kann die Vorrichtung 1, 901 mittels mindestens eines Programmsensors, der als RFID-Sensor und/oder QR-Code Sensor und/oder Barcode-Sensor eingerichtet ist, RFID-Signale bzw. eine QR-Kennzeichnung bzw. einen Barcode von der mindestens einen Saatmatte 56 zur Steuerung der Programmsteuerung erfassen. Dadurch kann die Steuerungseinheit 60 mittels der Programmsteuerung auf Basis der Klimatisierungsdaten ein auf das Saatgut in der entsprechenden Aufzuchteinheit 50 abgestimmtes Innenraumklima in dem Aufnahmeraum 12, 912 herstellen.

Dazu kann die Steuerungseinheit 60 mittels jeweils einer RFID-Antenne, die in einem einem unteren Stockwerk (definiert beispielsweise mittels einer in einem unteren Teil des Aufnahmeraums 12, 912 aufgenommenen Aufzuchteinheit 50) entsprechenden Bereich des Aufnahmeraums 12, 912 und in einem einem oberen Stockwerk (definiert beispielsweise mittels einer in einem oberen Teil des Aufnahmeraums 12, 912 aufgenommenen Aufzuchteinheit 50) entsprechenden Bereich des Aufnahmeraums 12, 912 angeordnet sein können, jede der einen oder mehreren auf jeweils einen Mattenträger 54 aufgebrachten Saatmatten 56 einzeln identifizieren. Anders ausgedrückt kann die Vorrichtung 1, 901 mittels der RFID-Antennen Saatgut bzw. Pflanzen identifizieren, das bzw. die auf jeder der einen bis mehreren Saatmatten 56, die auf den jeweiligen Mattenträger 54 im unteren Stockwerk bzw. im oberen Stockwerk aufgelegt wurden, aufgebracht sind bzw. wachsen, wobei jede der Saatmatten 56 dazu eine RFID-Kennzeichnung aufweisen kann.

Des Weiteren kann sich die Vorrichtung 1, 901 in verschiedenen Ausführungsbeispielen des Verfahrens mittels einer WLAN-Antenne, beispielsweise eine WiFi-Antenne, über WLAN mit dem Internet verbinden, wobei die WLAN-Antenne beispielsweise in einer oberen Abdeckung der Vorrichtung 1, 901 angeordnet sein kann. Die Steuerungseinheit 60 kann außerdem über das Internet in einer Cloud gespeicherte Daten abrufen. Beispielsweise kann die Steuerungseinheit 60 in der Cloud gespeicherte Daten bezüglich des in den Aufnahmeraum 12, 912 eingebrachten Saatguts bzw. der daraus wachsenden Pflanzen abrufen. Nachfolgend kann die Steuerungseinheit 60 auf Basis der aus der Cloud abgerufenen Daten Regelgrößen für die Lufttemperatur, die Luftfeuchtigkeit, die Beleuchtungsqualität, die Beleuchtungsintensität, die Beleuchtungsdauer und/oder das Befüllen der Bewässerungswannen festlegen und an die Klimatisierungseinrichtung 40, die Beleuchtungsvorrichtung 30 bzw. die Bewässerungsvorrichtung 20 ausgeben. Entsprechend kann die Steuerungseinheit 60 die Klimatisierungseinrichtung 40, die Beleuchtungsvorrichtung 30 und/oder die Bewässerungsvorrichtung 20 derart ansteuern, dass die Lufttemperatur, die Luftfeuchtigkeit, die Beleuchtungsqualität, die Beleuchtungsintensität, die Beleuchtungsdauer und/oder das Befüllen der Bewässerungswannen 22 entsprechend den spezifischen Bedürfnissen der in den Aufnahmeraum 12, 912 eingebrachten bzw. wachsenden Pflanzen eingestellt wird.

Alternativ kann die Steuerungseinheit 60 die Bewässerungsvorrichtung 20, die Beleuchtungsvorrichtung 30 und/oder die Klimatisierungseinrichtung 40 auf Basis der individuell auf das Saatgut 870 abgestimmten Klimatisierungsdaten und/oder Bewässerungsdaten und/oder Beleuchtungsdaten ansteuern.

Beispielsweise kann die Vorrichtung 1, 901 in dem Verfahren zur Aufzucht von Pflanzen mittels der Programmsteuerung auf Basis der Klimatisierungsdaten ein auf das auf der Saatmatte 56 fixierte Saatgut und/oder auf die auf der Saatmatte 56 wachsenden Pflanzen abgestimmtes Innenraumklima in dem Aufnahmeraum 12, 912 einstellen. Außerdem kann die Vorrichtung 1, 901 mittels der Programmsteuerung auf Basis der Bewässerungsdaten der Saatmatte 56 Wasser und Nährstoffe in einer auf das auf der Saatmatte 56 fixierte Saatgut und/oder auf die auf der Saatmatte 56 wachsenden Pflanzen abgestimmten Menge und Zusammensetzung zuführen. Des Weiteren kann die Vorrichtung zur Aufzucht von Pflanzen 1, 901 mittels der die Beleuchtungsvorrichtung 30 steuernden Programmsteuerung auf Basis der Beleuchtungsdaten Licht in einer auf das auf der Saatmatte 56 fixierte Saatgut und/oder auf die auf der Saatmatte 56 wachsenden Pflanzen abgestimmten Wellenlängenzusammensetzung (anders ausgedrückt spektralen Zusammensetzung) und für eine auf das auf der Saatmatte 56 fixierte Saatgut und/oder auf die auf der Saatmatte 56 wachsenden Pflanzen abgestimmte Dauer abstrahlen.

Das Verfahren zur Aufzucht von Pflanzen in der Vorrichtung 1, 901 kann dementsprechend ferner das Zuführen von Wasser und/oder Nährstoffen zu den Bewässerungswannen 22 aufweisen. Dabei können die eine oder mehreren Bewässerungswannen 22, die in den Aufnahmeraum 12, 912 der Vorrichtung eingebracht wurden, derart befüllt werden, dass dem auf den darüber angeordneten Saatmatten 56 fixierten Saatgut bzw. den auf den Saatmatten 56 wachsenden Pflanzen in ausreichendem Maße Feuchtigkeit und/oder Nährstoffe zugeführt wird.

Beispielsweise können die Bewässerungswannen 22, über denen Saatmatten 56 mit noch nicht ausgekeimtem Saatgut angeordnet sind, derart befüllt werden, dass die eine oder mehreren auf dem Mattenträger 54 aufliegenden Saatmatten 56 derart benetzt werden, dass den Samenkörnern genügend Feuchtigkeit zum Auskeimen zugeführt wird. Alternativ können die trockenes Saatgut aufweisenden Saatmatten 56 durch den Nutzer mittels einer Sprühflasche oder unter dem Wasserhahn benetzt werden, bevor sie in den Aufnahmeraum 12, 912 der Vorrichtung 1, 901 eingebracht und auf den Mattenträger 54 aufgelegt werden.

Andererseits können die Bewässerungswannen 22, über denen Saatmatten 56 angeordnet sind, auf denen das Saatgut bereits ausgekeimt ist und auf denen die aus dem Saatgut wachsenden Keimlinge oder Pflanzen Wurzeln aufweisen, derart befüllt werden, dass lediglich den Wurzeln Wasser und Nährstoffe zugeführt werden. In diesem Falle können die Bewässerungswannen 22 lediglich soweit befüllt werden, dass die darüber angeordneten Saatmatten 56 selber nicht benetzt werden, so dass Schimmelbildung in den Saatmatten 56 vermieden werden kann.

In Summe können die hier bereitgestellten Ausführungsbeispiele der Saatmatten zum Einbringen in eine Vorrichtung zur Aufzucht von Pflanzen gewährleisten, Saatgut in einer Weise bereitzustellen, dass aus Saatgut Pflanzen, wie beispielsweise Kräuter, Gemüse, Obst und Salat, gezogen werden können. Mit Hilfe der hierin beschriebenen Saatmatten kann dadurch das Anbauen der Pflanzen in einem Maßstab, der auch in moderne Küchen realisierbar ist, ermöglicht werden. Dadurch wird mittels der vorliegenden Saatmatten dem durchschnittlichen Verbraucher eine Möglichkeit an die Hand gegeben, in einer Vorrichtung zur Aufzucht von Pflanzen Kräuter, Salate, Gemüse oder Obst zu ziehen und dadurch seinem Speiseplan entsprechend seiner persönlichen Vorlieben frische Zutaten hinzufügen zu können. Dabei kann einerseits eine gewünschte Qualität sichergestellt werden und andererseits kann der dafür notwendige Aufwand auf ein dem modernen Berufsleben angepasstes Maß beschränkt werden.

Insbesondere wird mittels der bereitgestellten Ausführungsbeispiele der Saatmatten und der entsprechenden Ausstattung der Vorrichtung zur Aufzucht der auf der Saatmatte wachsenden Pflanzen sichergestellt, dass mittels einer entsprechenden Kennzeichnung der Saatmatte das darauf aufgebrachte Saatgut identifiziert und Informationen bezüglich der für das Keimen und Wachsen dieser spezifischen, zu einem bestimmten Zeitpunkt in den Aufnahmeraum der Vorrichtung eingebrachten Pflanzen förderlichen Umgebungsbedingungen abgerufen werden können. Die Umgebungsbedingungen können nachfolgend in der Vorrichtung zur Aufzucht von Pflanzen entsprechend den angebauten Pflanzensorten und ihrem Zustand, beispielsweise ihrem Wachstumsfortschritt, mittels der Klimatisierungseinrichtung, der Bewässerungsvorrichtung und/oder der Beleuchtungsvorrichtung eingestellt werden.

Durch das Bereitstellen aller Bestandteile der Saatmatten, wie beispielsweise Trägersubstrat, Kleber und Auflageschicht aus vorzugsweise organischen Materialien wird sichergestellt, dass die Saatmatten vollständig kompostierbar und daher umweltfreundlich sind. Die beschriebenen Ausgestaltungsmöglichkeiten der Kennzeichnung der Saatmatten als davon abtrennbare Bestandteile können des Weiteren eine einfache Möglichkeit bereitstellen, das organische Trägersubstrat der Saatmatte inklusive der darauf möglicherweise verbleibenden Pflanzenreste der Wertstoffsammlung, bspw. der Sammlung organischer Abfälle, zuzuführen. Dadurch kann das vor allem in Städten wichtige Problem des Anfallens von zusätzlichem Restmüll vermieden werden.

Die besondere Ausgestaltung der in verschiedenen Ausführungsbeispielen bereitgestellten Saatmatten mit einer optionalen Auflageschicht stellt außerdem sicher, dass insbesondere Saatgut, das größere Samenkörner aufweist, auf den Saatmatten sicher fixiert werden kann und günstige Bedingungen zum Auskeimen des Saatguts eingestellt werden können. Ferner können in Form von Saatmatten unterschiedlicher Größen und Dicken, wie sie hierin vorgestellt werden, für unterschiedliche Pflanzenarten jeweils ideale Substratabmessungen bereitgestellt werden, so dass Pflanzen, die in einer Art dichten Teppich angebaut werden können, wie beispielsweise Kräuter oder Salate, in großen Volumina geerntet werden können, während Pflanzen, die besser einzelnstehend gedeihen, wie beispielsweise Tomaten und Erdbeeren, genügend Raum haben, um dank optimaler Versorgung mit Licht große und ideal reife Früchte entwickeln zu können.

Nicht zuletzt gewährleistet die in verschiedenen Ausführungsbeispielen bereitgestellte Ausgestaltung der Saatmatten in stapelbarer Form sowohl für den Einzelhandel als auch für den Endverbraucher einen einfachen Transport bis zum Endkunden und eine an den Verbrauch angepasste Lagerhaltung. Dies ermöglicht es insbesondere dem Nutzer, sich eigenständig mit frischen Produkten zu versorgen, ohne dabei auf kurzfristige Nachkaufmöglichkeiten angewiesen zu sein.

Das Bereitstellen der Saatmatten gemäß den hierin beschriebenen Ausführungsbeispielen ermöglicht es somit dem Verbraucher, frische Nutzpflanzen und damit frische Produkte für einen abwechslungsreichen Speiseplan auf einfache Art und Weise im eigenen, auch kleinen Haushalt zu ziehen, und enthebt ihn dabei der Notwendigkeit, selber Saatgut und ein voluminöses Pflanzsubstrat, wie beispielsweise frische Pflanzerde, bereitzustellen. Zudem ermöglichen die bereitgestellten Saatmatten ein Hantieren mit dem Saatgut und den Pflanzen, ohne dass dabei in größerem Maße Schmutz entsteht. Die hier vorgestellten Saatmatten gewährleisten insbesondere eine einfache Handhabung sowohl des Saatguts als auch des Pflanzsubstrats, wobei beides bezüglich der Größe und Ausgestaltung der Saatmatte und bezüglich des darauf ausgebrachten Saatguts für eine bestmögliche Handhabbarkeit aufeinander abgestimmt ist.

## Patentansprüche

1. Saatmatte zum Einbringen in eine Vorrichtung zur Aufzucht von Pflanzen, die Saatmatte aufweisend:
• ein Trägersubstrat; und
• Saatgut,
• wobei das Saatgut mittels eines Klebers auf dem Trägersubstrat fixiert ist.

2. Saatmatte nach Anspruch 1, wobei das Trägersubstrat aus einem organischen Material gebildet ist,
wobei das Trägersubstrat vorzugsweise in einer Dicke von ungefähr 5 mm eine Wasseraufnahmekapazität in einem Bereich von ungefähr 3500 cm³ bis ungefähr 5000 cm³ pro Quadratmeter aufweist,
wobei das Trägersubstrat vorzugsweise aus einem Material gebildet ist, ausgewählt aus einer Gruppe bestehend aus Jute, Hanf, Steinwolle, Baumwolle, Cellulose, Viscose, Jiffy® Vitro-Plug™ oder Oasis® Floral Foam.

3. Saatmatte nach Anspruch 1 oder 2, wobei der Kleber ein organischer Kleber ist,
wobei der Kleber vorzugsweise ein auf Stärke basierender Kleber ist.

4. Saatmatte nach einem der Ansprüche 1 bis 3, wobei das Saatgut beispielsweise Samen von Salat, Kräutern, Obst und Gemüse, wie beispielsweise Tomaten, und Pilze oder Pilzmyzelien aufweisen kann.

5. Saatmatte nach einem der Ansprüche 1 bis 4, ferner aufweisend eine RFID-Kennzeichnung und/oder eine QR-Kennzeichnung und/oder einen Barcode,
wobei die RFID-Kennzeichnung bzw. die QR-Kennzeichnung bzw. der Barcode vorzugsweise das auf der Saatmatte fixierte Saatgut codiert.

6. Saatmatte nach einem der Ansprüche 1 bis 5, wobei eine Vorrichtung zur Aufzucht von Pflanzen dazu eingerichtet ist, mittels eines Programmsensors einer Programmsteuerung das auf der Saatmatte fixierte Saatgut zu identifizieren,
wobei der Programmsensor vorzugsweise als RFID-Sensor und/oder QR-Code Sensor und/oder Barcode-Sensor eingerichtet ist und dazu eingerichtet ist, RFID-Signale der RFID-Kennzeichnung bzw. die QR-Kennzeichnung bzw. den Barcode von mindestens einer in einen Aufnahmeraum der Vorrichtung eingebrachten Saatmatte zur Steuerung der Programmsteuerung zu erfassen.

7. Saatmatte nach Anspruch 6, wobei die Programmsteuerung individuell auf in dem Aufnahmeraum aufgenommenes Saatgut abgestimmte Klimatisierungsdaten und/oder Bewässerungsdaten und/oder Beleuchtungsdaten aufweist,
wobei für die Programmsteuerung vorzugsweise ein Datenspeicher vorgesehen ist, aus welchem die individuell auf das Saatgut abgestimmten Klimatisierungsdaten und/oder Bewässerungsdaten und/oder Beleuchtungsdaten abrufbar sind, wobei vorzugsweise der Datenspeicher über eine in der Vorrichtung vorgesehene Internetverbindung als externer Datenspeicher vorgesehen ist.

8. Saatmatte nach einem der Ansprüche 5 bis 7, wobei die RFID-Kennzeichnung als RFID-Chip ausgeführt ist,
wobei der RFID-Chip vorzugsweise Daten bezüglich des auf der Saatmatte fixierten Saatguts und/oder bezüglich der Saatmatte aufweist,
wobei die auf dem RFID-Chip gespeicherten Daten vorzugsweise Daten betreffend einen Namen des Saatguts, eine Sorte des Saatguts, eine Spezies des Saatguts, einen Hersteller des Saatguts, eine LOT-Nummer des Saatguts, ein Herstellungsjahr der Saatmatte und/oder eine Registrierungsnummer der Saatmatte aufweisen, und
wobei die auf dem RFID-Chip gespeicherten Daten vorzugsweise ferner Daten betreffend individuell auf das auf den Saatmatten fixierte Saatgut abgestimmte Klimatisierungsdaten und/oder Bewässerungsdaten und/oder Beleuchtungsdaten sind.

9. Saatmatte nach einem der Ansprüche 6 bis 8, wobei die Vorrichtung zur Aufzucht von Pflanzen eingerichtet ist, mittels der Programmsteuerung auf Basis der Klimatisierungsdaten in dem Aufnahmeraum ein auf das auf der Saatmatte fixierte Saatgut und/oder auf die auf der Saatmatte wachsenden Pflanzen abgestimmtes Innenraumklima einzustellen,
wobei die Vorrichtung zur Aufzucht von Pflanzen vorzugsweise eingerichtet ist, mittels der Programmsteuerung auf Basis der Bewässerungsdaten der Saatmatte Wasser und Nährstoffe in einer auf das auf der Saatmatte fixierte Saatgut und/oder auf die auf der Saatmatte wachsenden Pflanzen abgestimmte Menge zuzuführen, und
wobei die Vorrichtung zur Aufzucht von Pflanzen vorzugsweise eingerichtet ist, mittels der eine Beleuchtungseinrichtung steuernden Programmsteuerung auf Basis der Beleuchtungsdaten Licht in einer auf das auf der Saatmatte fixierte Saatgut und/oder auf die auf der Saatmatte wachsenden Pflanzen abgestimmten Wellenlängenzusammensetzung, in einer auf das auf der Saatmatte fixierte Saatgut und/oder auf die auf der Saatmatte wachsenden Pflanzen abgestimmten Intensität und für eine auf das auf der Saatmatte fixierte Saatgut und/oder auf die auf der Saatmatte wachsenden Pflanzen abgestimmte Dauer abzustrahlen.

10. Vorrichtung zur Aufzucht von Pflanzen, aufweisend einen Aufnahmeraum zum Aufnehmen einer oder mehrerer Saatmatten gemäß einem der Ansprüche 1 bis 9.

11. Verfahren zum Herstellen einer Saatmatte, aufweisend:
• Aufbringen eines Klebers auf ein Trägersubstrat;
• Aufbringen von Saatgut auf das mit dem Kleber versehene Trägersubstrat; und
• Fixieren des Saatguts mittels des Klebers auf dem Trägersubstrat.

12. Verfahren nach Anspruch 11, wobei das Trägersubstrat aus einem organischen Material gebildet wird,
wobei das Trägersubstrat vorzugsweise aus einem Material gebildet wird, das in einer Dicke von ungefähr 5 mm eine Wasseraufnahmekapazität in einem Bereich von ungefähr 3500 cm³ bis ungefähr 5000 cm³ pro Quadratmeter aufweist,
wobei das Trägersubstrat vorzugsweise aus einem Material gebildet wird, ausgewählt aus einer Gruppe bestehend aus Jute, Hanf, Steinwolle, Baumwolle, Cellulose, Viscose, Jiffy® Vitro-Plug™ oder Oasis® Floral Foam.

13. Verfahren nach Anspruch 11 oder 12, wobei das Aufbringen des Klebers auf dem Trägersubstrat aufweist:
• Aufbringen des Klebers auf das Trägersubstrat mittels einer oder mehrerer Walzen,
• Aufbringen des Klebers auf das Trägersubstrat mittels eines Sprühsystems, oder
• Aufbringen des Klebers auf das Trägersubstrat mittels eines oder mehrerer Pinsel,
• wobei der Kleber vorzugsweise ein organischer Kleber ist,
• wobei der Kleber vorzugsweise ein auf Stärke basierender Kleber ist; und
wobei das Aufbringen von Saatgut auf das mit dem Kleber versehene Trägersubstrat aufweist:
• Aufbringen des Saatguts auf den feuchten Kleber,
• wobei das Saatgut aus Samen besteht, und
• wobei die Samen gestreut oder einzeln an einer bestimmten Position präzise abgelegt werden,
• wobei vorzugsweise die in dem Kleber vorhandene Feuchtigkeit so gering ist, dass das Saatgut nicht zu keimen beginnt, und
• wobei der Kleber anschließend vorzugsweise an der Luft und/oder mittels Wärme und/oder mittels eines Luftstroms getrocknet wird,
• wobei als Saatgut vorzugsweise Samen von Salat, Kräutern, Obst und Gemüse, wie beispielsweise Tomaten, und Pilze oder Pilzmyzelien verwendet werden.

14. Verfahren nach einem der Ansprüche 11 bis 13, ferner aufweisend:
• Kennzeichnen der Saatmatte mittels einer RFID-Kennzeichnung und/oder einer QR-Kennzeichnung und/oder eines Barcodes,
• wobei die RFID-Kennzeichnung bzw. die QR-Kennzeichnung bzw. der Barcode vorzugsweise das auf der Saatmatte fixierte Saatgut codiert; oder
• Kennzeichnen der Saatmatte mittels einer RFID-Kennzeichnung, wobei die RFID-Kennzeichnung als RFID-Chip ausgeführt ist,
• wobei der RFID-Chip vorzugsweise Daten bezüglich des auf der Saatmatte fixierten Saatguts und/oder bezüglich der Saatmatte aufweist,
• wobei die auf dem RFID-Chip gespeicherten Daten vorzugsweise Daten betreffend einen Namen des Saatguts, eine Sorte des Saatguts, eine Spezies des Saatguts, einen Hersteller des Saatguts, eine LOT-Nummer des Saatguts, ein Herstellungsjahr der Saatmatte und/oder eine Registrierungsnummer der Saatmatte aufweisen, und
• wobei die auf dem RFID-Chip gespeicherten Daten vorzugsweise ferner Daten betreffend individuell auf das auf den Saatmatten fixierte Saatgut abgestimmte Klimatisierungsdaten und/oder Bewässerungsdaten und/oder Beleuchtungsdaten sind.

15. Verfahren zur Aufzucht von Pflanzen, aufweisend:
• Herstellen einer oder mehrerer Saatmatten gemäß einem der Ansprüche 11 bis 14;
• Einbringen der einen oder mehreren mit Saatgut versehenen Saatmatten in einen Aufnahmeraum einer Vorrichtung zur Aufzucht von Pflanzen; und
• Bereitstellen von Umgebungsbedingungen derart, dass das Saatgut auf der einen oder mehreren Saatmatten keimen kann und daraus Pflanzen wachsen können, mittels der Vorrichtung; oder
• Herstellen einer oder mehrerer Saatmatten gemäß einem der Ansprüche 11 bis 14;
• Bereitstellen von ersten Umgebungsbedingungen derart, dass das Saatgut auf der einen oder mehreren Saatmatten keimen kann und daraus Pflanzen wachsen können;
• Unterbrechen des Wachstumsprozesses mittels geeigneter zweiter Umgebungsbedingungen;
• Einbringen der einen oder mehreren Saatmatten, auf denen Pflanzen wachsen, in einen Aufnahmeraum einer Vorrichtung zur Aufzucht von Pflanzen; und
• Bereitstellen von dritten Umgebungsbedingungen derart, dass die Pflanzen weiter wachsen und gegebenenfalls Früchte tragen können, mittels der Vorrichtung;
• wobei die Umgebungsbedingungen vorzugsweise jeweils eine Lufttemperatur, eine Luftfeuchtigkeit, eine Wasserzufuhr, eine Nährstoffzufuhr, eine Beleuchtungsqualität, eine Beleuchtungsintensität und/oder eine Beleuchtungsdauer betreffen,
• wobei die Vorrichtung zur Aufzucht von Pflanzen vorzugsweise mittels eines Programmsensors einer Programmsteuerung das auf der Saatmatte fixierte Saatgut identifiziert,
• wobei die Programmsteuerung vorzugsweise aus einem Datenspeicher individuell auf das identifizierte Saatgut abgestimmte Klimatisierungsdaten und/oder Bewässerungsdaten und/oder Beleuchtungsdaten abruft,
• wobei vorzugsweise der Datenspeicher als externer Datenspeicher vorgesehen ist und die Programmsteuerung die Daten mittels einer Internetverbindung abruft.
